# EUROPEAN PATENT SPECIFICATION

(11) **EP 0 627 886 B1**
(45) Date of publication and mention of the grant of the patent: **16.01.2002**
(21) Application number: 93907195.7
(22) Date of filing: 02.03.1993
(51) Int. Cl.: A23G 3/30

(54) **AN IMPROVED PROCESS FOR MANUFACTURING WAX-FREE CHEWING GUMS WITH FAST SET-UP TIMES**
EIN VERBESSERTES VERFAHREN ZUR HERSTELLUNG VON WACHSFREIEN KAUGUMMIS MIT KURZEN HÄRTUNGSZEITEN
PROCEDE AMELIORE DE PRODUCTION DE GOMMES A MACHER EXEMPTES DE CIRE, AVEC DES TEMPS DE PRISE ACCELERES

(30) Priority: 03.03.1992 WO PCT/US92/01686; 30.06.1992 US 906921; 06.11.1992 WO PCT/US92/09615; 29.12.1992 US 996914; 29.12.1992 US 997876; 30.12.1992 US 997732; 30.12.1992 WO PCT/US92/11317
(43) Date of publication of application: 14.12.1994
(73) Proprietor: WM. WRIGLEY JR. COMPANY, Chicago Illinois 60611 (US)
(72) Inventor: SYNOSKY, Steven P., Greenbrook, NJ 08812 (US); REED, Michael A., Merrillville, IN 46410 (US); LAUGHLIN, Kenneth W., Hinsdale, IL 60521 (US)
(74) Representative: Allard, Susan Joyce
(86) International application number: US9301943
(87) International publication number: WO9317579

(56) References cited:
- EP-A- 0 376 468
- WO-A-87/02223
- US-A- 3 857 965
- US-A- 3 984 574
- US-A- 4 604 287
- US-A- 5 023 093

## Description

The present invention relates to a method making a wax-free chewing gum having improved processability and chewing texture, and to improved wax-free chewing gums prepared by this method.

In US-A-5023093, there is disclosed a chewing gum base with reduced calorie content. The central components of that gum base are 10-25% polyvinyl acetate having a medium molecular weight of about 35,000 to 55,000, 4.5% to about 10% acetylated monoglyceride.

U.S Patent 3,984,574, issued to Comollo, discloses an abhesive chewing gum base in which the non-tack properties were achieved by eliminating conventional chewing gum base ingredients which were found to contribute to chewing gum tackiness, and by substituting non-tacky ingredients in place of the conventional ingredients. Specifically, it was discovered that three classes of materials account for conventional chewing gum tackiness. These materials are elastomers, resins, and waxes.

In W08702223 there is described a carbohydrate syrup plasticizer composition for use in chewing gums to improve flexibility. The syrup comprises carbohydrate solids and water with less than 30% of the solids having a degree of polymerisation of one and more 20% solids with a degree of polymerisation of four or greater. The ratio of carbohydrate solids to plasticizing agent in the composition is between 0.5:1 and 100:1 and the total water content of the composition is less than 20%.

Comollo eliminated natural and some synthetic elastomers from chewing gum base, and substituted in their place one or more non-tacky synthetic elastomers such as polyisobutylene, polyisoprene, isobutylene-isoprene copolymer and butadiene-styrene copolymer. Comollo also eliminated the tack-producing natural resins and modified natural resins and used instead relatively high amounts of hydrogenated or partially hydrogenated vegetable oils or animal fats. Finally, Comollo completely excluded waxes from the gum base, but included polyvinyl acetate, fatty acids, and mono and diglycerides of fatty acids. Comollo made no mention of improved processing efficiencies.

The present invention is directed to an improved and more efficient method of manufacturing a wax-free chewing gum containing a wax-free chewing gum base which is free of hydrocarbon-containing waxes and the fast setting chewing gums prepared therefrom. The gum base of the invention can include quantities of synthetic elastomer, elastomer plasticizer, filler and softener, and, like the gum base of Comollo, is substantially free of wax. However, the gum base of the invention is not limited to use in a non-tack chewing gum and may, therefore, contain optional quantities of natural elastomer and/or natural resins. The gum base of the invention may also contain optional quantities of minor ingredients such as color and antioxidant. Certain combinations of elastomers, and certain selections of elastomer plasticizer and softeners contribute to the fast setting wax-free gums and the improved process for making these wax-free chewing gums, as in one embodiment of this invention.

Although, the use of natural elastomers in the gum base compliments certain chewing gum flavors, such as mint oil, by rounding out the otherwise harsh or grassy notes in the flavor, the natural elastomers which may be used in this invention are lower in concentration than in earlier wax-free chewing gums. The presence of natural elastomers and natural resins in the gum base may also contributes to improved chewing gum texture and flavor retention, and are retained optionally in this invention.

There is currently a need or desire in the chewing gum industry for gum bases which are devoid or substantially free of hydrocarbon-containing waxes and which contain desired quantities of natural elastomers, natural resins, or both, and for improved manufacturing procedures therefor.

With the foregoing in mind, it is a feature and advantage of one embodiment of the invention to provide a method of manufacturing a substantially wax-free chewing gum having a rapid set-up time.

It is also a feature and advantage of one embodiment of the invention to provide improved chewing gums which contain wax-free chewing gum bases, which chewing gums may be formed more efficiently into sticks, coated pillows, or balls.

It is also a feature and advantage of one embodiment of the invention to provide improved chewing gums made by said inventive method which method does not require long tempering and set-up times and still provide a chewing gum having soft initial bite.

It is also a feature and advantage of one embodiment of the invention to provide improved wax-free chewing gums that may be produced more efficiently and with less wastage, less trim gum recycle, and more quickly.

It is also a feature of one embodiment of the invention to provide a method and formulation to produce a wax-free chewing gum having a soft bite and fast set-up time, said method permitting faster and more efficient production and throughput, and less wastage than processes previously operating to produce wax containing or wax-free chewing gums.

It is also a feature and advantage of one embodiment the invention to provide chewing gum produces having desirable properties such as soft initial bite, flavor quality and strength, flavor and sweetness retention, breath freshening, dental and oral health properties and good shelf stability.

According to the present invention there is provided a method of making a wax-free chewing gum having an initial soft bite comprising: mixing selected wax-free chewing gum ingredients which provide a chewing gum with an initial soft bite as measured by having a Taber Stiffness ranging from 15 to 55 Taber Units, thereby forming a raw mixture; tempering the raw mixture for less than 30 minutes to form a tempered mixture; forming said tempered mixture into gum sheets; tempering the gum sheets for from 6 to 24 hours, thereby forming tempered gum sheets, then processing the tempered gum Sheets to a finished chewing gum product.

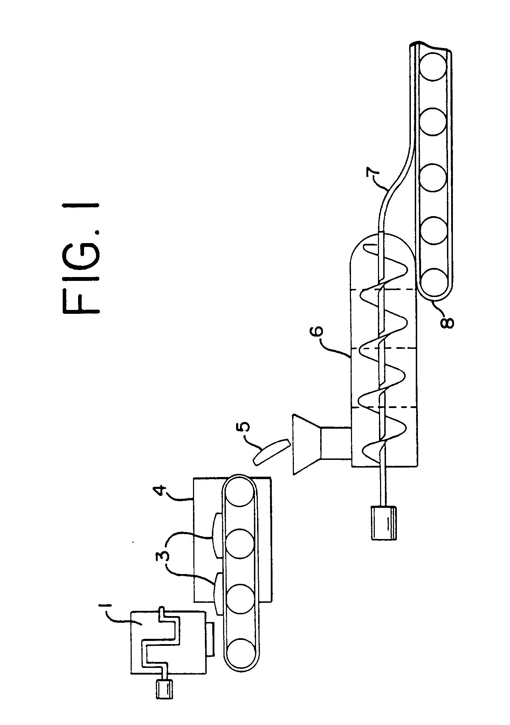

Figure 1 illustrates an embodiment of an arrangement for the Mixer, the Extruding Device, Conveyor Belt and Continuous Gum Ribbon.

Figure 2A illustrates an arrangement of the smooth surfaced Initial Reduction Rollers, their counter rotating operation, and their height adjustment and juxtapositioning to control the Nip distance.

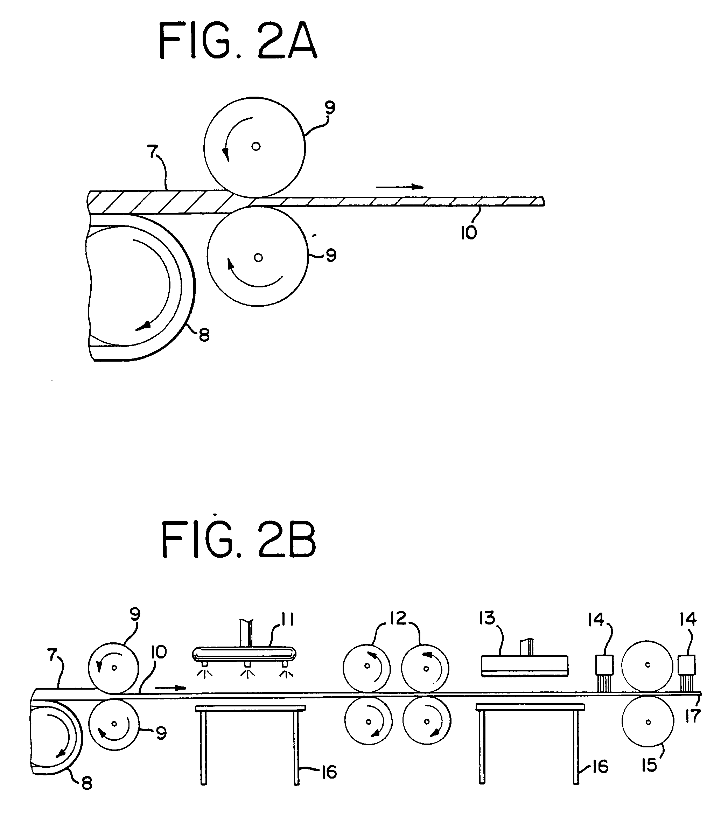

Figure 2B illustrates an embodiment of an arrangement for operating the Initial Reduction Rollers to obtain a flattened continuous gum ribbon, and an arrangement having three pairs of Reduction rollers, along with transport tables, rolling compound application, metal detectors, the ribbon's direction of travel, roller rotation and the like to obtain a final flattened gum ribbon.

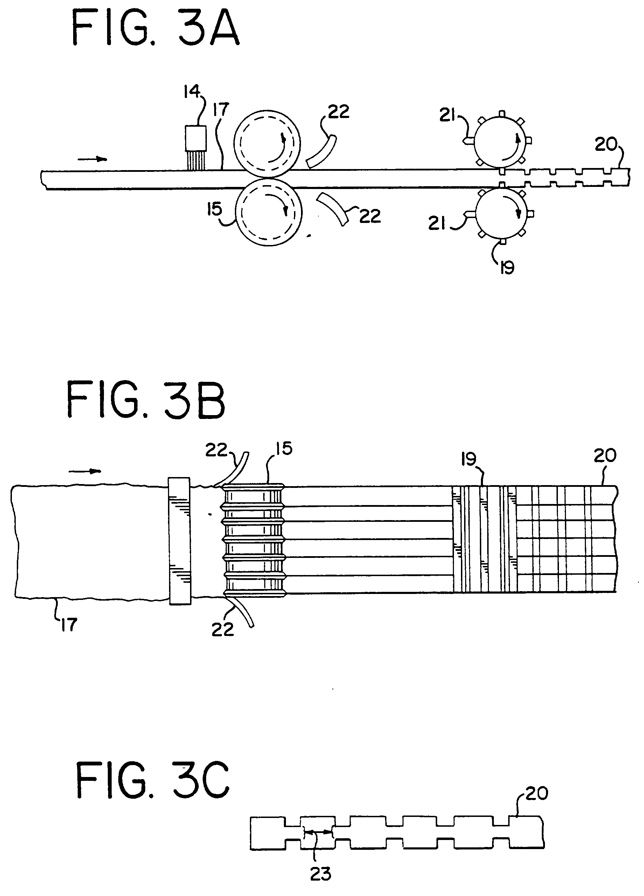

Figures 3A and B illustrate an arrangement for the longitudinal scoring and edge cutting rollers and latitudinal scoring and cutting rollers, operating in side view and top view to provide, respectively, a parallel scored smooth edged ribbon and a cross scored and cut gum sheet.

Figure 3C illustrates an embodiment for the "land" and land thickness.

Figure 4 illustrates in arrangement for both longitudinal and latitudinal scalloped scoring and cutting rollers used to produce pelleted and coated gums.

In accordance with the invention, a wax-free chewing gum base is provided for use in either non-tack or conventional wax-free chewing gums, which gums may be either bubble gums or regular chewing gums. The chewing gum base of the invention contains from 20 to 60 weight per cent synthetic elastomer, from 0 to 30 weight per cent natural elastomer, 5 to 55 weight per cent elastomer plasticizer, 4 to 40 weight per cent filler, 5 to 40 weight per cent softener, and optional minor amounts (about one per cent or less) of miscellaneous ingredients such as colorants, antioxidants, etc; and is free of mineral waxes such as petroleum waxes.

Synthetic elastomers may include, but are not limited to, polyisobutylene or polyisoprene with GPC molecular weight of from 10,000 to 95,000, isobutylene-isoprene copolymer (butyl elastomer), styrene-butadiene copolymers having styrene-butadiene ratios of from 1:3 to 3:1, polyvinyl acetate having GPC molecular weight of from 2,000 to 90,000, polyethylene, vinyl acetate-vinyl laurate copolymer having vinyl laurate content of from 5 to 50 percent by weight of the copolymer, and combinations thereof. Preferred combinations are binary or tertiary combinations of styrene-butadiene copolymer, polyisobutylene, and isobutylene-isoprene copolymer. The most preferred combination is a tertiary combination of all three of these elastomers, which may then be blended with vinyl polymers like polyvinyl acetate, polyethylene, or the vinyl acetate-vinyl laureate copolymer, or combinations thereof.

Other preferred characteristics of the elastomers are, for polyisobutylene, 50,000 to 80,000 GPC molecular weight, for styrene-butadiene, 1:1 to 1:3 bound styrene-butadiene, for polyvinyl acetate, 10,000 to 65,000 GPC molecular weight with the higher molecular weight polyvinyl acetates typically used in bubble gum base, and for vinyl acetate-vinyl laurate, vinyl laurate content of from 10 to 45 percent.

Natural elastomers, when used in this invention may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, chiquibul, crown gum, pendare, venezuelau chicle, leche de vaca, niger gutta, tunu, chilte and combinations thereof. The preferred natural elastomers are jelutong, chicle, sorva and massaranduba balata. The preferred elastomers and elastomer concentrations vary depending on whether the chewing gum in which the base is used is abhesive or conventional, bubble gum or regular gum, as discussed below.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, glycerol ester of tall oil rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; natural terpene resin; and any suitable combinations of the foregoing. The preferred elastomer plasticizers will also vary depending on the specific application, and on the type of elastomer or mixture of elastomers which is used. For example, use of terpene resin to wholly or partially replace ester gums will cause the gum base to be less tacky.

The term "wax-free" as used herein refers to the exclusion of waxes which contain mineral hydrocarbons. Natural waxes such as carnauba wax, bees wax, rice bran wax, and candellila wax do not contain mineral hydrocarbons and are therefor acceptable for use in the chewing gum base and chewing gums prepared therefrom. Most preferably, the chewing gum processes of this invention use no natural waxes, or if used, limit the use to no more than 5 weight percent of the gum base.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Fats, Oils, Softeners/emulsifiers may include tallow, hydrogenated tallow, hydrogenated and partially hydrogenated vegetable oils, cocoa butter, glycerol monostearate, glycerol diacetate (also known as diacetin) glycerol triacetate (also referred to as triacetin), lecithin, mono-, di- and triglycerides, acetylated monoglycerides, fatty acids (e.g. stearic, palmitic, oleic and linoleic acids), lanolin, and combinations thereof. Hydrogenated or partially hydrogenated vegetable oils are generally preferred, either alone or particularly in combination with other softeners such as the glycerol stearate esters, triacetin, diacetin and lecithin. Of particular value in forming gum bases useful in the improved process are the vegetable oils or tallows with higher melting points, that is, melting points above about 40°C, either alone or in combination with glycerol stearate, triacetin or other softeners.

Colorants and whiteners may include FD&C-type dyes and lakes, fruit and vegetable extracts, titanium dioxide, cocoa powder and combinations thereof.

The wax-free gum base of the invention may also contain optional ingredients such as antioxidants. Because of the rapid set up, the lower temperature of operation, and increased efficiency of our process, we believe the antioxidant may be lowered to as much as from 10 to 80 percent of the levels normally required to manufacture wax containing chewing gums.

When the wax-free gum base of the invention is to be used in a regular (non-bubble) gum which has at least some abhesive (reduced tack) characteristics, the base should contain from 10 to 40 weight per cent synthetic elastomer, from 15 to 30 weight per cent elastomer plasticizer, from 5 to 30 weight per cent filler, from 15 to 35 weight per cent softener, from 0 to 1 weight per cent colorant and from 0 to 0.1 weight per cent antioxidant. Specific embodiments of the wax-free gum base are provided in Examples 1 to 30 below.

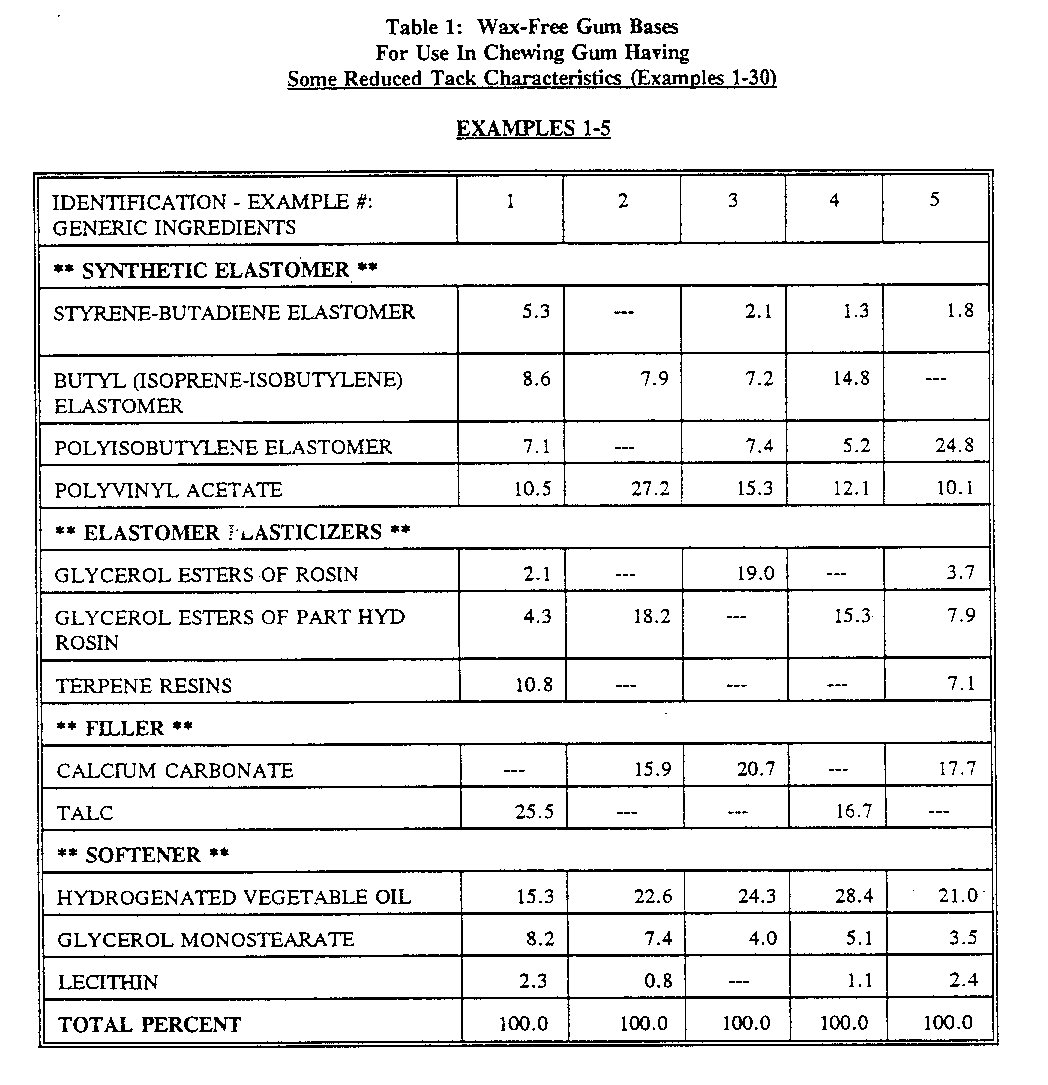

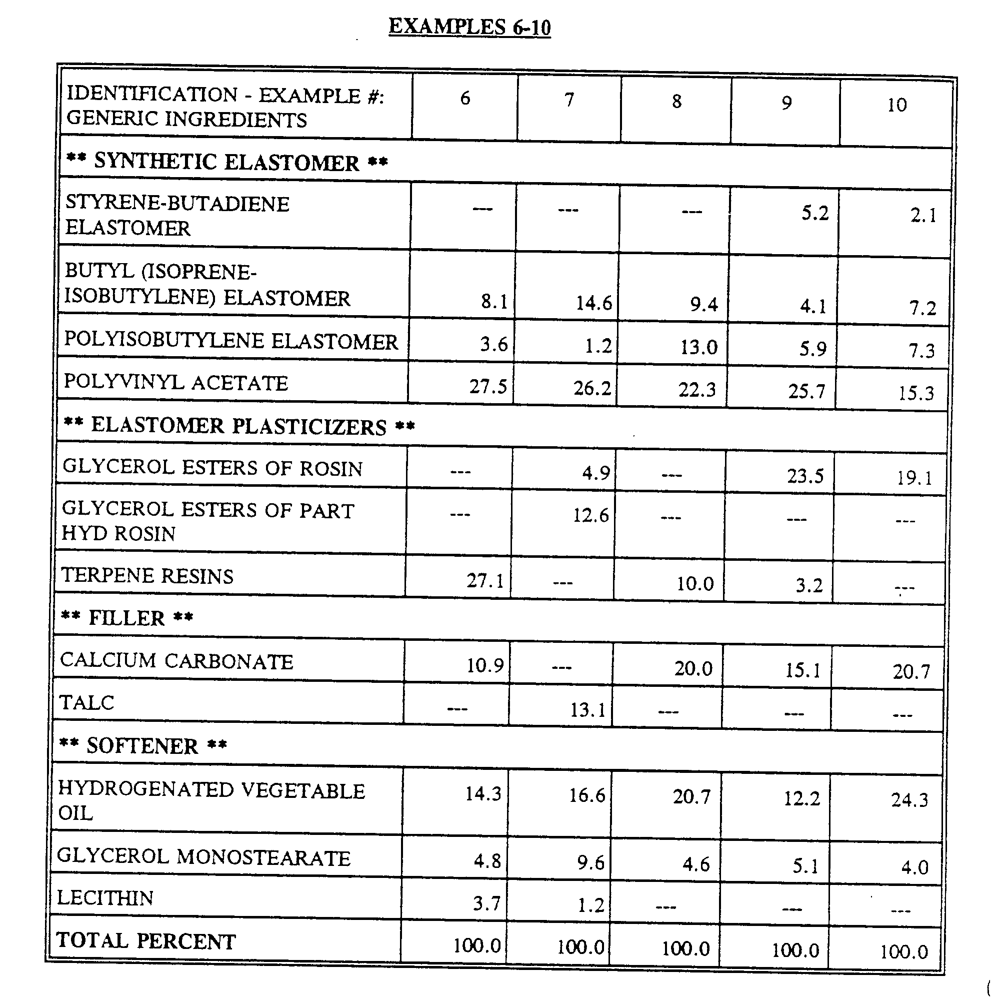

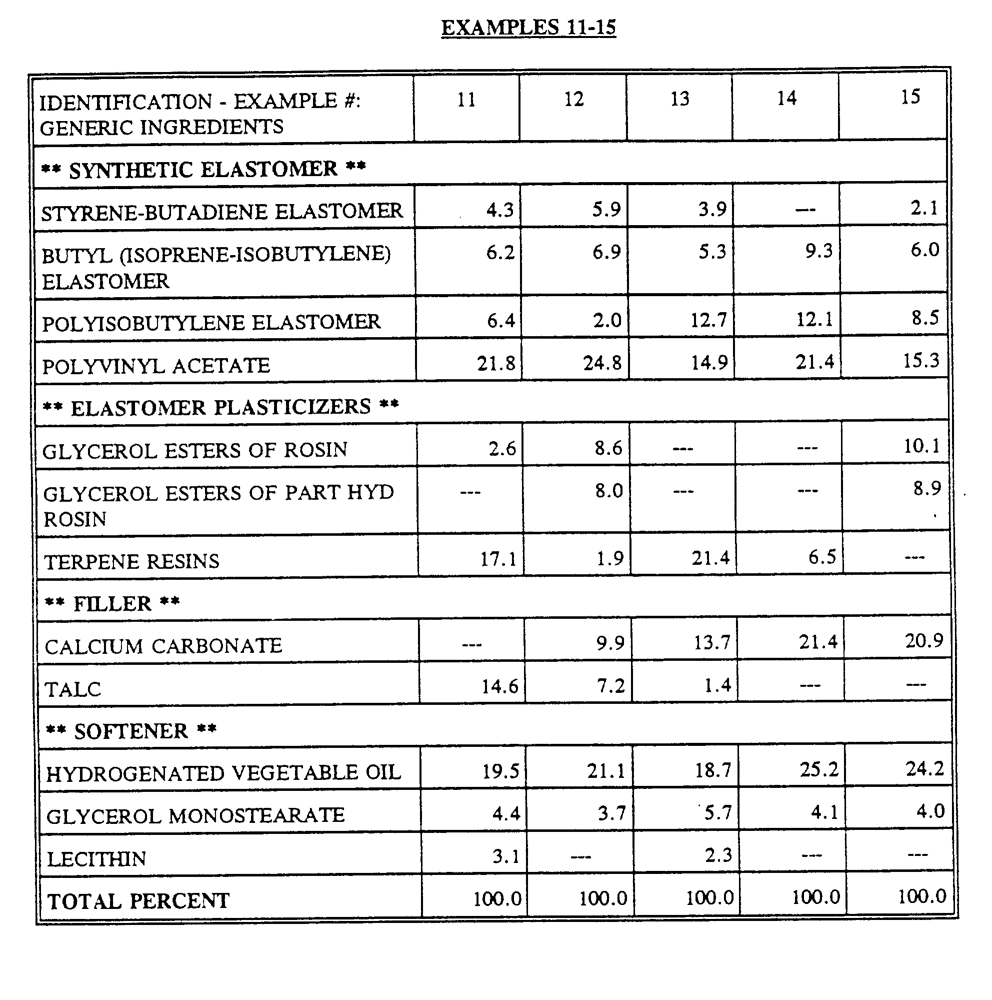

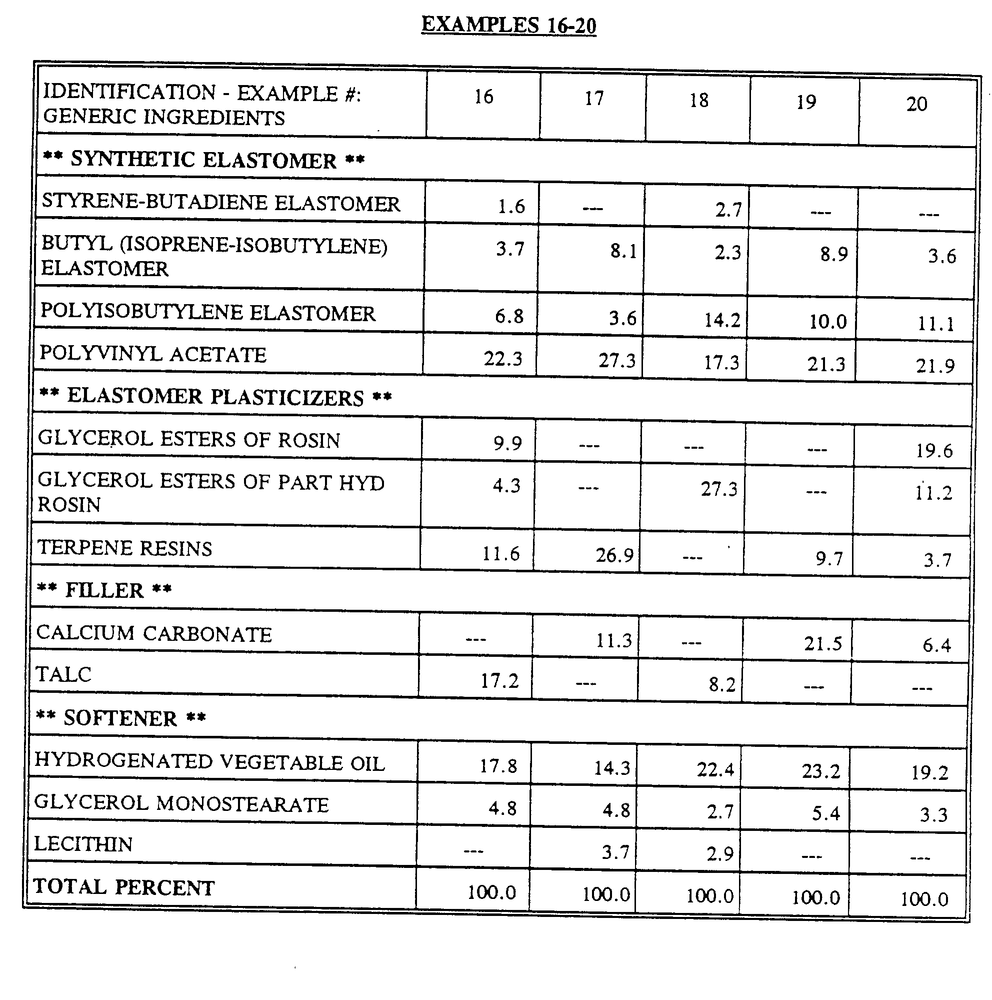

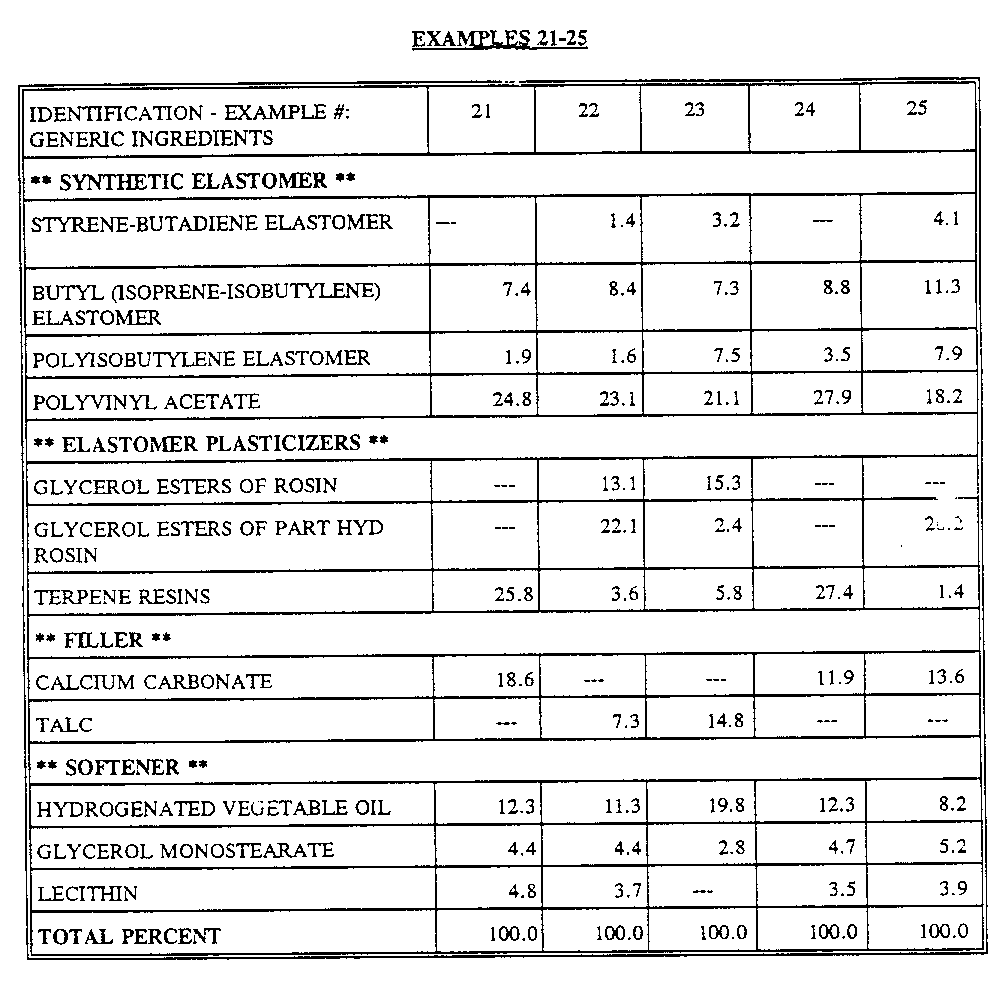

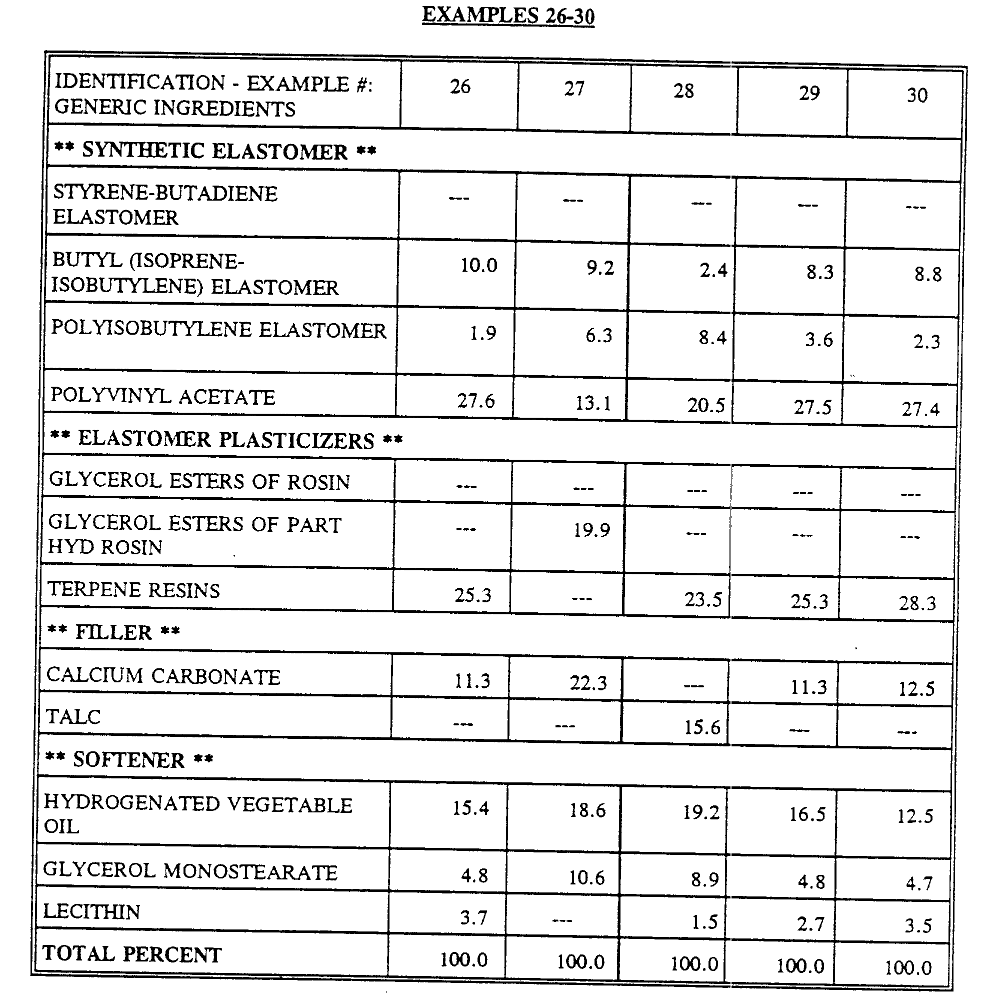

When the wax-free gum base of the invention is to be used in a regular (non-bubble) gum which does not have abhesive characteristics, the base should contain from 12 to 30 weight per cent natural elastomer, from 20 to 40 weight per cent synthetic elastomer, from 4 to 25 weight per cent elastomer plasticizer, from 5 to 25 weight per cent filler, from 15 to 30 weight per cent softener, from 0 to 1 weight per cent colorant and from 0 to 0.1 weight per cent antioxidant. Specific embodiments of the wax-free gum base fitting this description are provided in Examples 31 to 55 below:

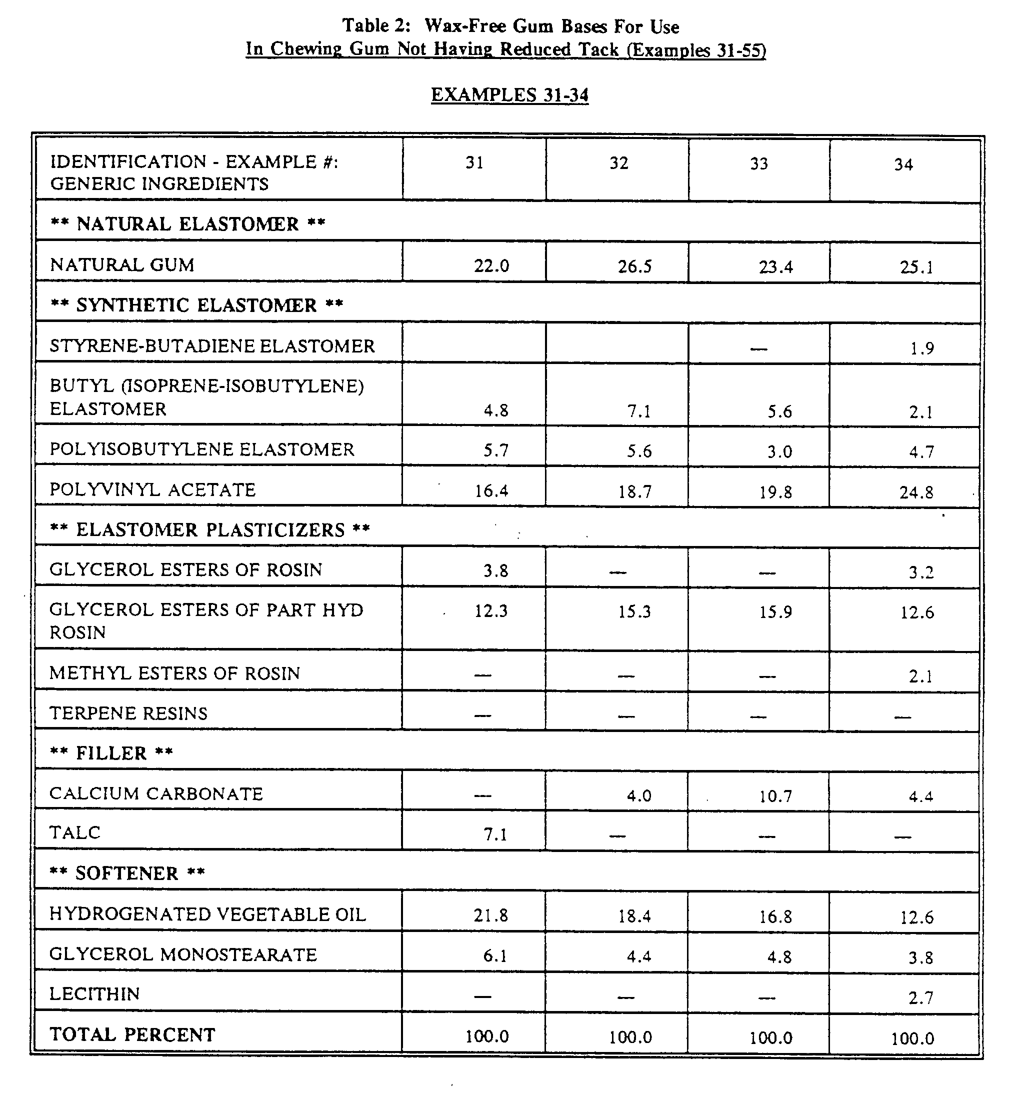

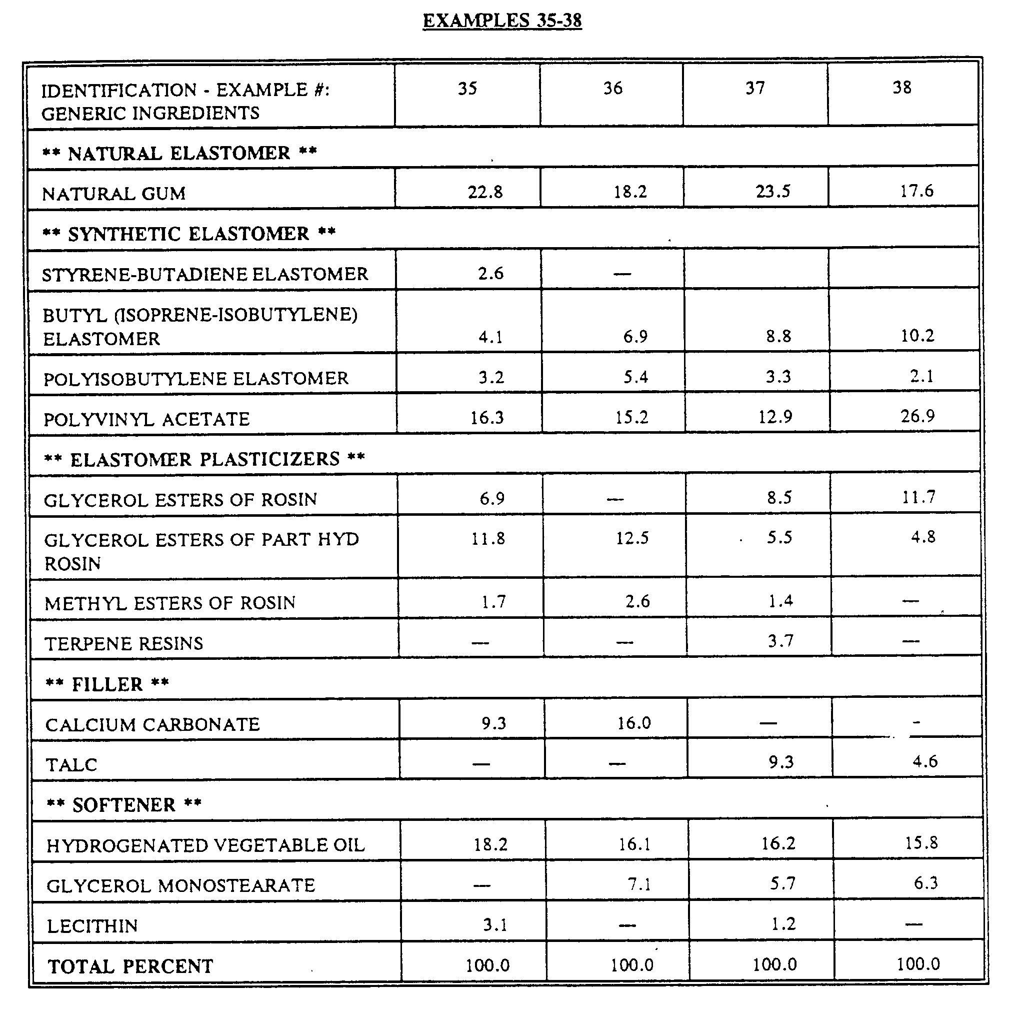

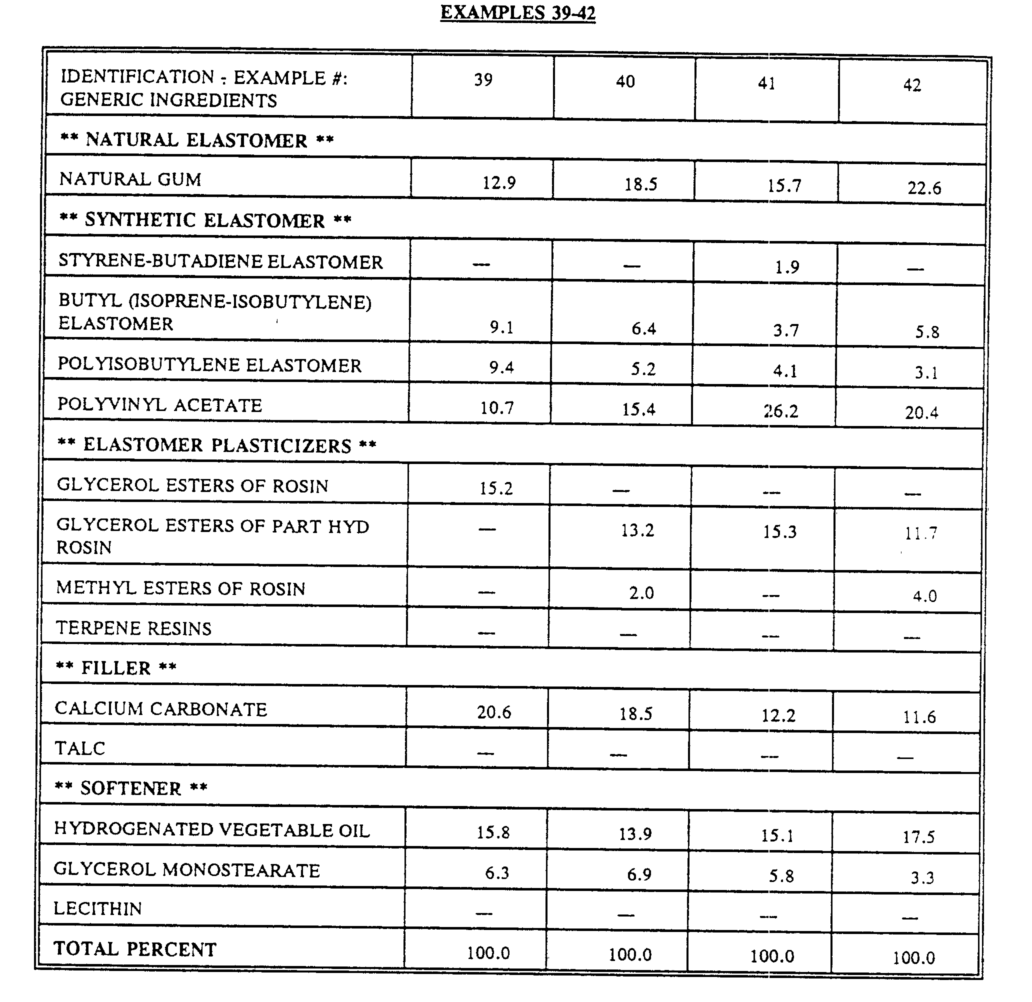

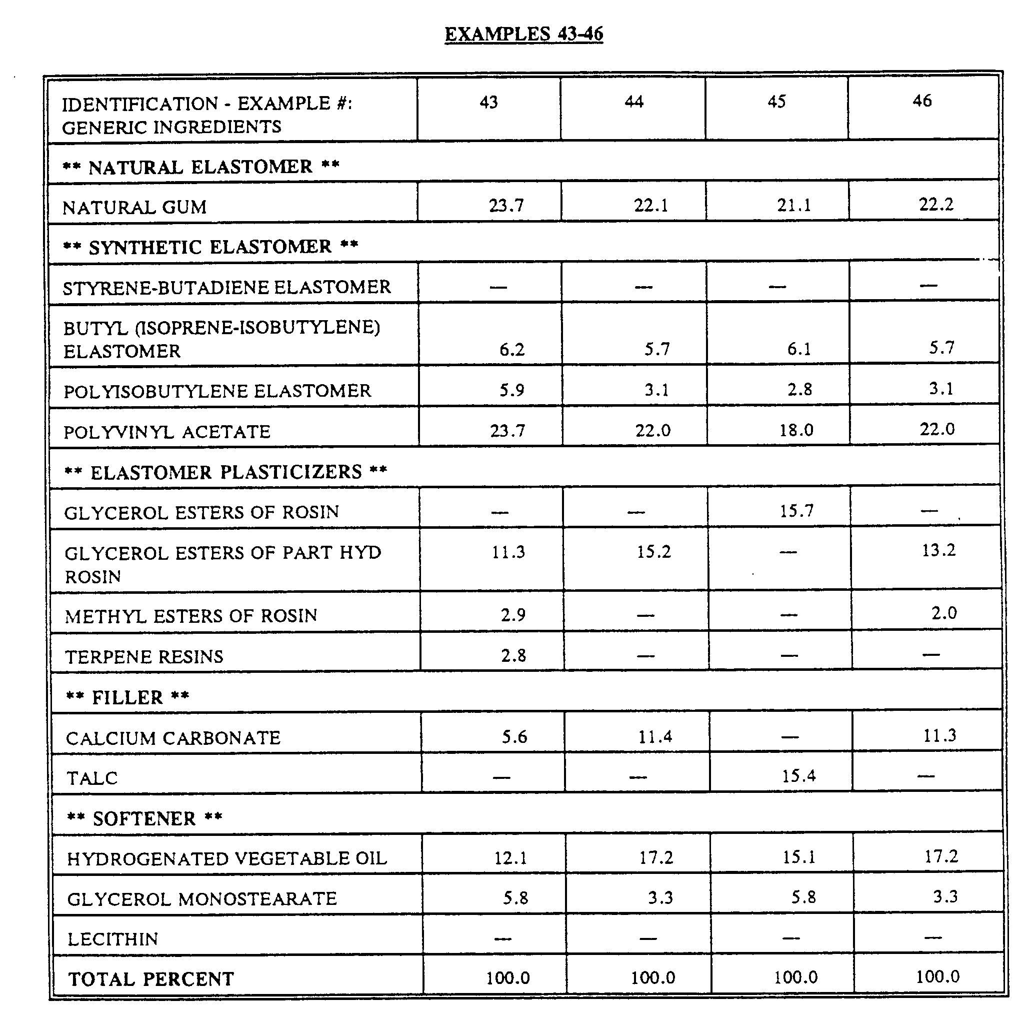

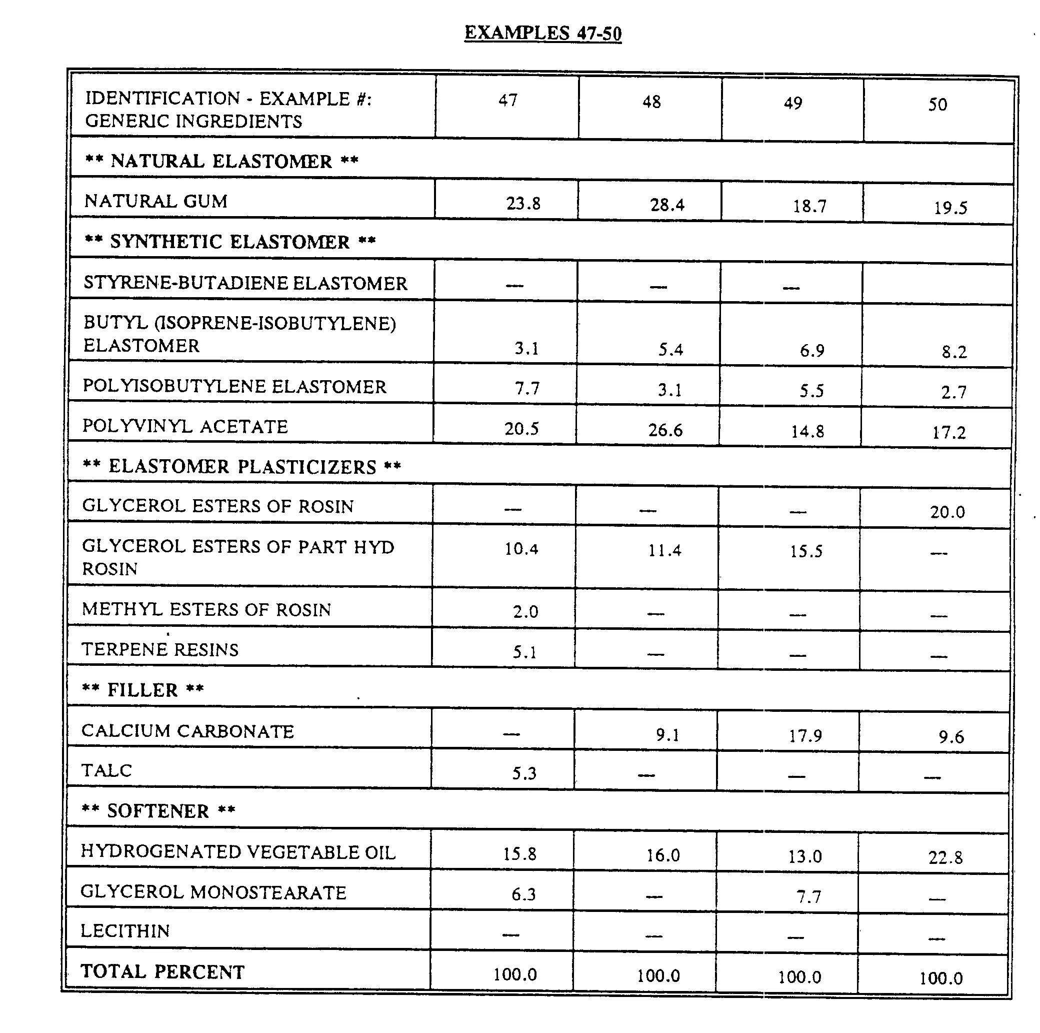

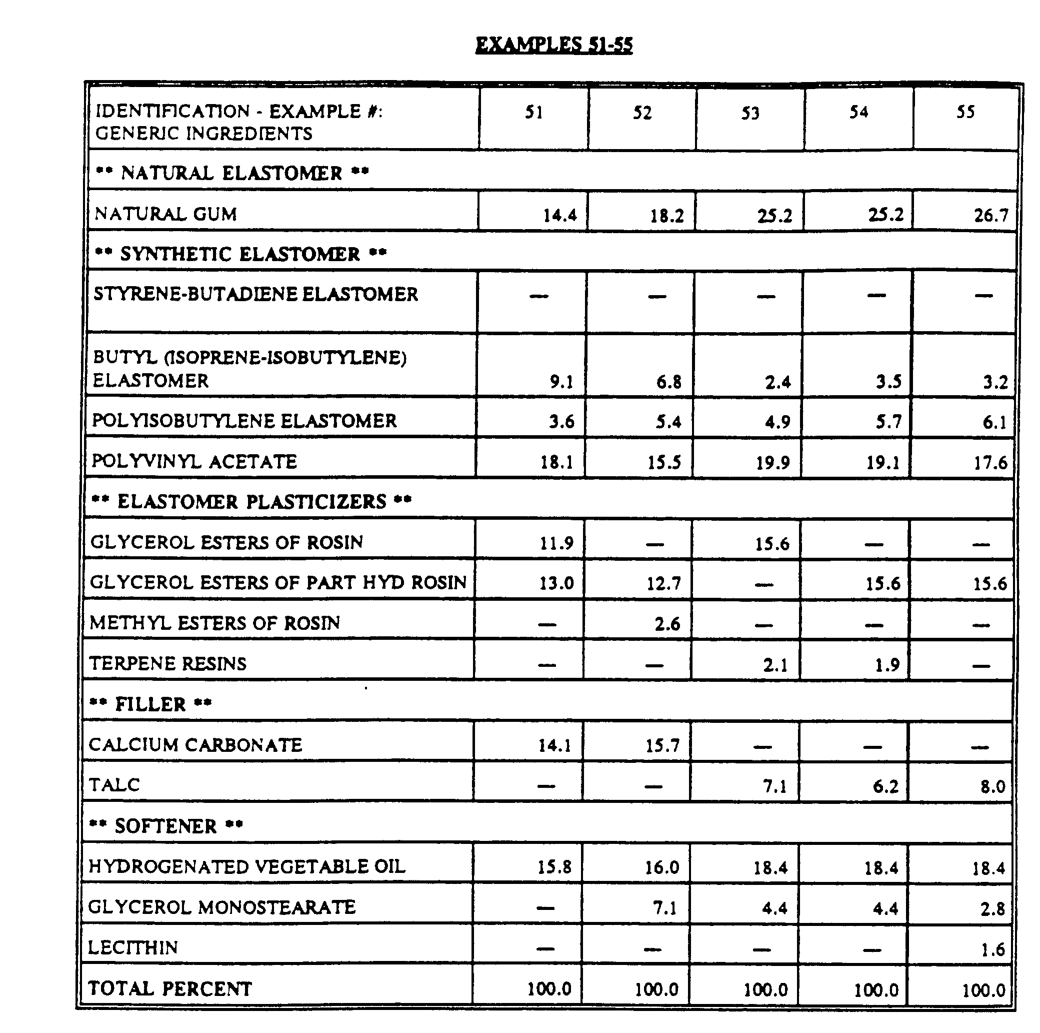

When the wax-free gum base of the invention is to be used in a bubble gum, the base should contain from 30 to 60 weight per cent synthetic elastomer, from 5 to 55 weight per cent elastomer plasticizer, from 10 to 35 weight per cent filler, from 5 to 25 weight per cent softener, from 0 to 1 weight per cent colorant and from 0 to 0.1 weight per cent antioxidant. Specific embodiments of the wax-free base for use in bubble gum are provided in Examples 56-74 below.

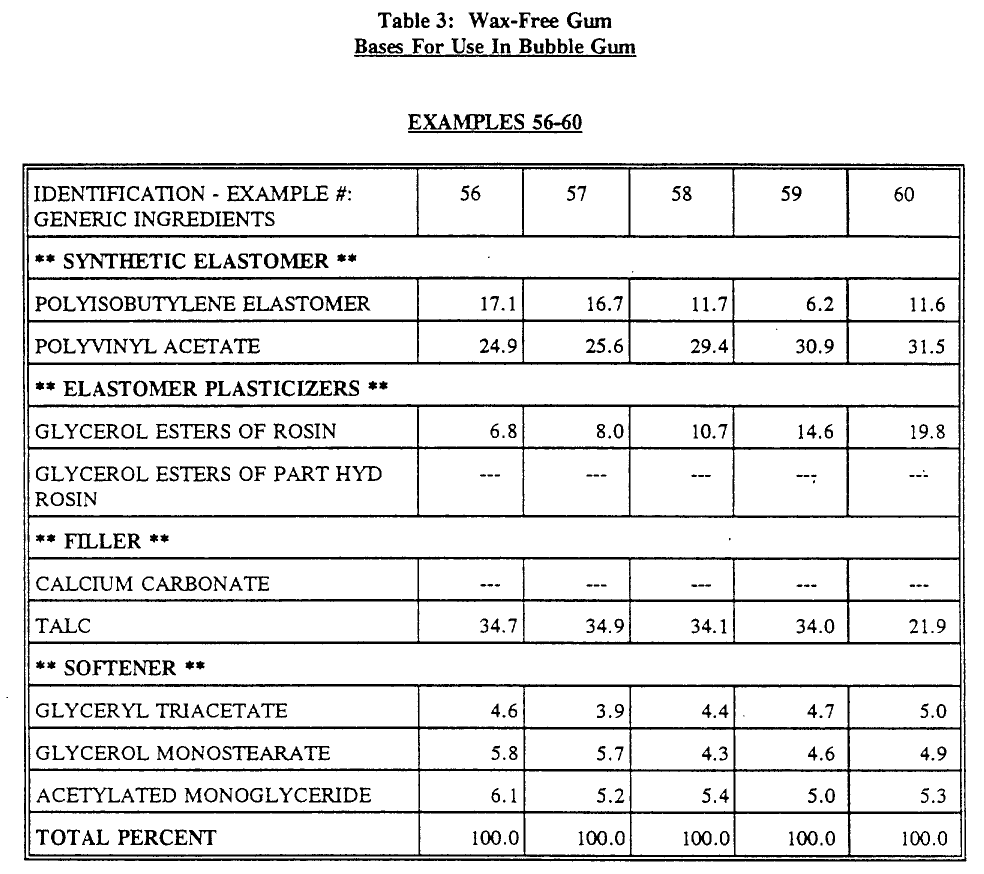

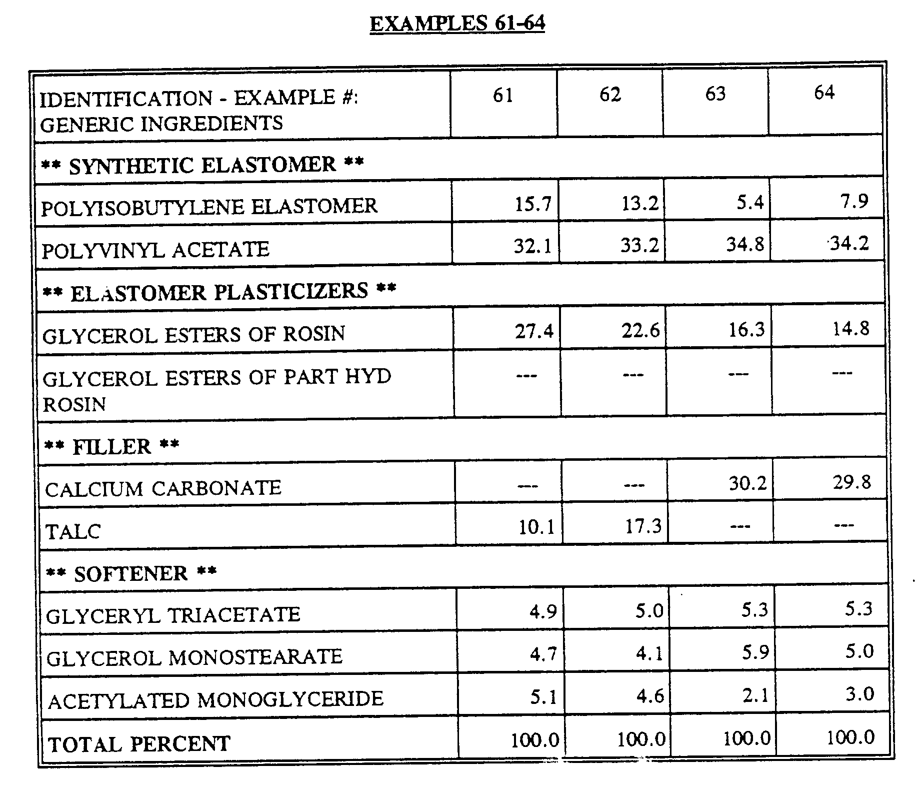

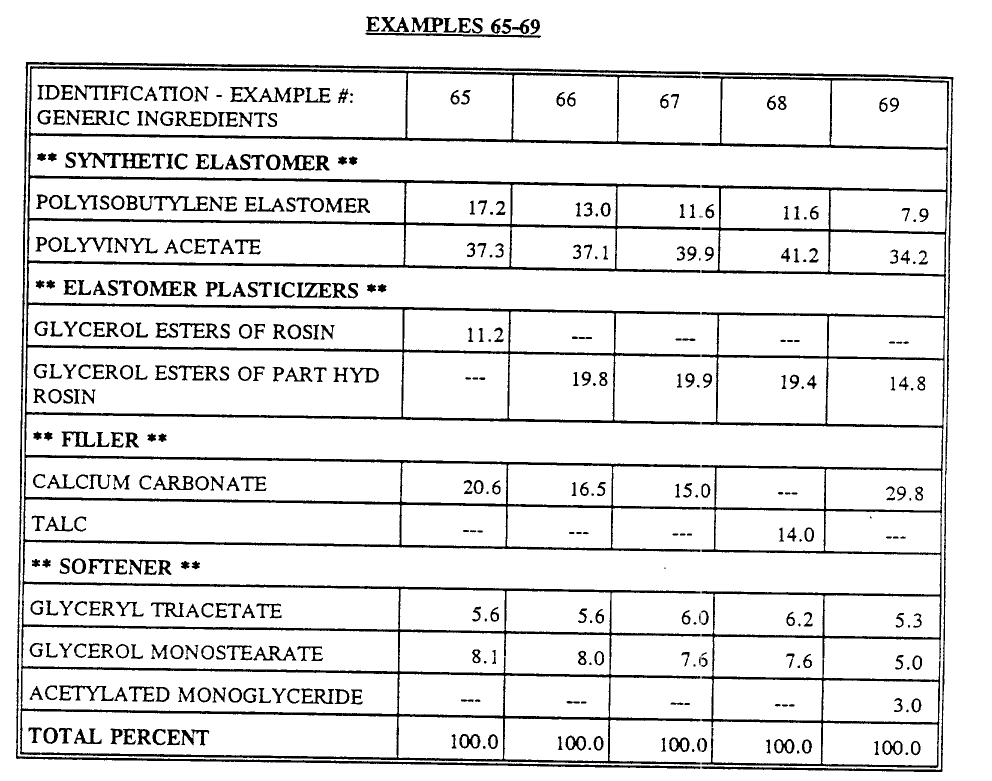

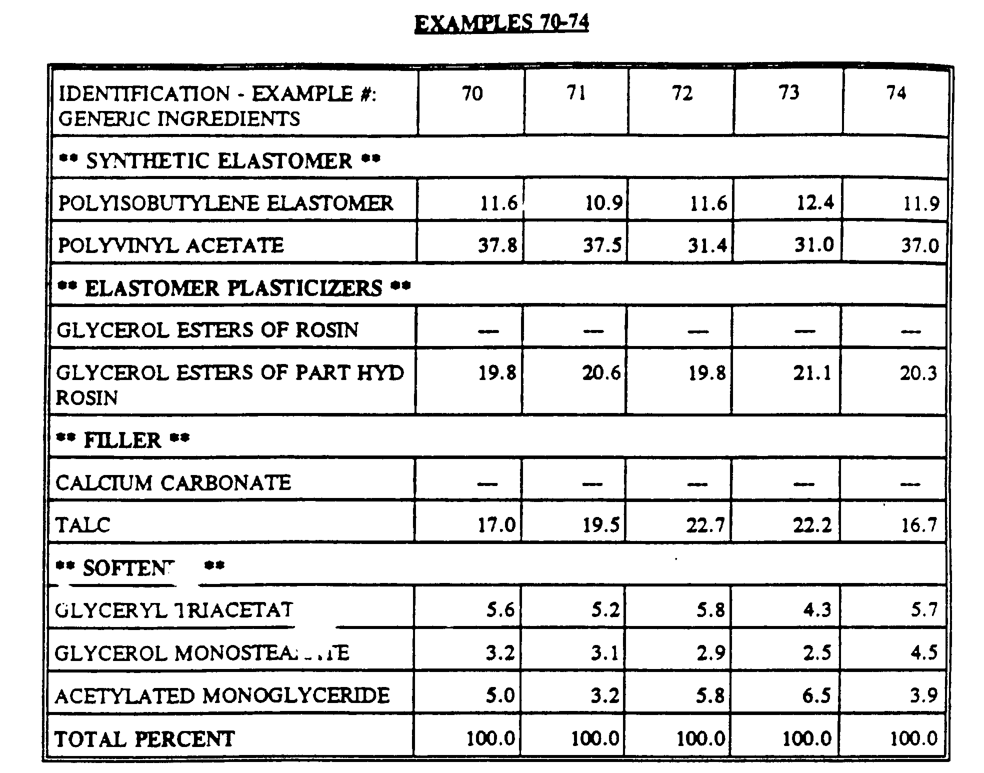

The wax-free gum base of the invention constitutes from 10 to 90 weight per cent of the chewing gum, more typically from 15 to 40 weight per cent of the chewing gum, and most commonly from 20 to 35 weight per cent of the chewing gum. The gum base is typically prepared by adding an amount of the elastomer, elastomer plasticizers and filler to a heated sigma blade mixer with a front to rear blade speed ratio of typically 2:1. The initial amounts of ingredients are determined by the working capacity of the mixing kettle in order to attain a proper consistency. After the initial ingredients have massed homogeneously, the balance of the elastomer plasticizer, filler, softeners, etc. are added in a sequential manner until a completely homogeneous molten mass is attained. This can usually be achieved in one to four hours, depending on the formulation. The final mass temperature can be from 60°C to 150°C, more preferably from 80°C to 120°C The completed molten mass is emptied from the mixing kettle into coated or lined pans, extruded or cast into any desirable shape and allowed to cool and solidify.

Although the above method for making base is typical and applies to both chewing and bubble bases, it has been found that there is a preferred method for making the bubble bases described in this invention.

First, all of the polyvinyl acetate and portions of the polyisobutylene and filler are added and blended in a heated sigma blade mixer. Softeners such as glycerol triacetate and/or acetylated monoglyceride are then added along with a second portion of each of polyisobutylene and filler. The acetylated monoglyceride may be added at the end of the process if desired and still not alter the chewing texture of the gum made from the base.

Next, the rest of the polyisobutylene (and/or other elastomers) and filler are added along with the elastomer plasticizer. Finally, the remaining ingredients such as glycerol monostearate and antioxidants may be added. Colorant may be added at any time during the mixing process and is preferably added at the start.

There are some variations to the above described preferred method which in no way limits the method as described. Those skilled in the art of gum base manufacture may be able to appreciate any minor variations.

In producing wax containing gum bases high in polyvinyl acetate, and particularly those high in high molecular weight polyvinyl acetate, it is advantageous to improve blending of the ingredients by removing the heat applied to the sigma blade mixer at some point in the process. This reduces the temperature of the gum base and causes greater compatibility of its ingredients. In the inventive gum base process for making the inventive gum base free of wax, there is no need to remove the heat applied. The degree of incompatibility is greatly reduced since there is no wax present. Nevertheless, heat is preferably removed at from 30 minutes to 90 minutes into the mixing time of the base production process.

In addition to the water-insoluble gum base, a typical chewing gum composition includes a water soluble bulk portion and one or more flavoring agents. The wax-free gum base of the invention can be used in any typical chewing gum composition.

The water soluble portion of the chewing gum may include softeners, bulk sweeteners, high intensity sweeteners, flavoring agents and combinations thereof. Water soluble or water dispersible softeners are added to the chewing gum in order to optimize the chewability and mouth feel of the gum. The softeners, which are also known as plasticizers or plasticizing agents, generally constitute from 0.5 to 15 percent by weight of the chewing gum. The softeners may include glycerin, lecithin, glycerol monostearate, hydroxylated lecithin, agar, carrageenan, and combinations thereof. Aqueous sweetener solutions such as those containing sorbitol, hydrogenated starch hydrolyzates, corn syrup and combinations thereof, may also be used as softeners and binding agents in chewing gum.

Bulk sweeteners constitute from 5.0 to 90.0 percent by weight of the chewing gum, more typically; from 20 to 80 percent by weight of the chewing gum and most commonly from 30 to 70 percent by weight of the chewing gum. Bulk sweeteners may include both sugar and sugarless sweeteners and sweetening components. Sugar sweeteners may include saccharide containing components including but not limited to sucrose, dextrose, maltose, dextrin, dried invert sugar, fructose, levulose, galactose, corn syrup solids, high maltose syrup, invert/high fructose syrup, maltotriose, glyceraldehyde, erythrose, xylose, lactose, leucrose, L-sugars, fructooligosaccharide and low calorie bulking agents such as indigestible dextrin, guar gum hydrolyzate, oligofructose, polydextrose, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolyzates, maltitol, lactitol, erythritol, cellobiitol, and the like, alone or in combination.

High intensity sweeteners may also be present and are commonly used with sugarless sweeteners. When used, high intensity sweeteners typically constitute from 0.001 to 5.0 percent by weight of the chewing gum, preferably from 0.01 to 1.00 percent by weight of the chewing gum. Typically, high intensity sweeteners are at least 20 times sweeter than sucrose. These may include but are not limited to sucralose, aspartame, salts of acesulfame, alitame, saccharin and its salts, cyclamic acid and its salts, glycyrrhizin, dihydrochalcones, thaumatin, monellin, stevia and the like, alone or in combination.

Often, in wax-free chewing gums, the removal of wax requires the addition of binders. Binders can include the bulk sweeteners such as corn syrup. In preferred low moisture formulations permitting rapid set-up, at least a portion if not all of the binder is a coevaporated Lycasin¹ syrup containing from 20 to 30 weight percent glycerin, from 5 to 10 weight percent water, and the remainder hydrogenated starch hydrolyzate (HSH) solids.
¹Lycasin is a trademark of the Roquette-Freres Company.

Combinations of sugar and/or sugarless sweeteners may be used in chewing gum. The sweetener may also function in the chewing gum in whole or in part as a water soluble bulking agent. Additionally, the softener may also provide additional sweetness such as with aqueous sugar or alditol solutions.

Flavoring agents should generally be present in the chewing gum in an amount within the range of from 0.1 to 15 percent by weight of the chewing gum, preferably from 0.2 to 5 percent by weight of the chewing gum, most preferably from 0.5 to 3 percent by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

Optional ingredients such as colors, food acidulants, emulsifiers, pharmaceutical agents, vitamins, and additional flavoring agents may also be included in chewing gum.

Chewing gum is generally manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets. Generally, the ingredients are mixed by first melting the gum base, filtering the molten gum mass to remove any insolubles, and adding it to the running mixer. The gum base may alternatively be melted in the mixer. Color and emulsifiers can be added at this time.

A softener such as glycerin can be added next along with syrup and part of the bulk portion. Further parts of the bulk portion may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

The benefits of the invention are predominantly found after the chewing gum is mixed in the mixer with a wax-free chewing gum base, water soluble bulking (sweeteners, binding agents, and optionally certain water soluble softeners and binders, for example glycerin, lecithin and coevaporated glycerin/hydrogenated starch hydrolyzates) and flavoring agents. Preferably, the wax-free gum base is manufactured as described above, using at least two, and preferably at least three synthetic elastomers, and may contain some natural elastomers as well. In terms of elastomer content, the wax-free gum base comprises styrene-butadiene, from 0 to 20 weight percent of the gum base; polyisobutylene, from 20 to 60 weight percent of gum base; and isobutylene-isoprene copolymer (butyl elastomer), from 0 to 40 weight percent of the gum base. The elastomers may also contain vinyl polymers, such as polyvinyl acetate. Additionally, the gum base further comprises hydrogenated or partially hydrogenated vegetable oil, from 10 to 35 weight percent of gum base; elastomer plasticizers selected from glycerol esters of rosin, glycerol esters of partially hydrogenated rosin, terpene resins, or mixtures thereof, as long as the total elastomer plasticizer amount ranges from 10 to 40 weight percent of the gum base. The gum base also contains fillers, preferably from 15 to 30 weight percent; and other softeners (besides the vegetable oils above) selected from glycerol stearate esters, triacetin, glycerol stearate and lecithin, or mixtures thereof, preferably from 0.5 to 10 weight percent of the gum base.

The gum base is admixed in the Mixer (1) with bulking agents, such as sweeteners, and water soluble softeners and binders, as above described to form the original chewing gum mixture.

The process then releases the chewing gum mixture to a flat surface (2) as a raw gum loaf (3). The gum loaf normally weighs from 4.5 kg (10) to 14 kg (30 pounds).

The original wax containing chewing gum mixture normally contains trim gum (from 15-50 percent) and exits the mixer at temperatures above about 45°C, often as high as 45 to 50°C. However, with the preferred wax-free chewing gum formulations, it is possible and preferred to mix the chewing gum ingredients at lower temperatures, i.e. from 38 to 44°C, in the absence of or with greatly lowered amounts of trim gum (from 0 to 20 weight percent).

These raw gum loaves are then tempered for from 10 to 30 minutes in a controlled temperature, controlled humidity environment (4), and then the tempered leaves (5) are fed into the extruder (6). One of the advantages of the invention is that the wax-free chewing gum loaves only require from about 10-30 minutes to be tempered, preferably less than 15 minutes compared to 35 min. to an hour for normal wax containing gums.

The tempered gum loaves enter the extruder (6) and are mixed. The inlet temperature of the extruder ranges from 40 ± 5°C whereas the exit temperature of the extruder is at 60°C ± 3°C, or from 17°C to 23°C higher than the inlet temperature. At this temperature the gum is sufficiently fluid to be extruded. The temperature of extrusion for a wax-free gum is from 3 to 5°C higher than that required for a wax containing gum. As the semifluid and extruded gum exits the extruder, it does so in the shape of a relatively thick continuous gum strip or ribbon (7) and at a temperature of 50°C ± 5°C. A conveyor belt (8) collects the ribbon and moves the ribbon down the process line. The gum strip also cools and becomes less fluid.

The gum ribbon is typically from 12.7 mm (0.5 inches) to 76.2 mm (3.0 inches) thick and from 305 mm. 12.0 to 635 mm (25 inches) wide.

The ribbon of chewing gum is carried on the belt for a distance to the initial reduction rollers (9). The ribbon is fed into the nip of the initial reduction rollers (9). The upper and lower reduction rollers both rotate in the direction of the flow of the ribbon and act upon the ribbon to decrease its thickness. The flattened ribbon (10) exiting the nip of the initial reduction rollers is now from 5 mm (0.200 inches) to 12.7 mm (0.500 inches) thick, and from 508 mm (20) to 700 mm (27.5 inches) wide.

After the initial reduction rollers, described above, where the greatest decrease in ribbon thickness is achieved, the process may also include at least one other set of reduction rollers (12), preferably two sets or more, and at least one set of so called "finishing" rollers (15) to further decrease the thickness of the flattened gum ribbon (17) to achieve the desired commercial thickness.

Intermittently, a rolling compound is added, via an applicator (11), to at least one, or both, surfaces of the continuous or flattened gum ribbon. These rolling compounds are powdered, dry compounds, which are chosen to provide a non-stick surface during rolling and thickness reduction. The rolling compound used can be selected from the group consisting of sucrose, mannitol, starch, calcium carbonate, talc, lactitol, palatinit (hydrogenated isomaltulose), lactose, and combinations thereof. The preferred rolling compounds are dried and powdered sweeteners, such as powdered sucrose or powdered mannitol. The excess rolling compound that accumulate on the surface of the ribbon are normally brushed away by brushes (14) and then the brushed ribbon surface is scored or cut before wrapping. For safety purposes, a metal detector (13) may also be aligned with the gum ribbon.

In the production of a stick gum, the final brushed ribbon enters two sets of scoring and cutting rollers. The first set, (18) referred to as the longitudinal scoring rollers contain a multitude of circularly parallel ribs on the surface of each roller. As the ribbon enters the nip of these longitudinal scoring rollers, a multitude of parallel indentations are formed on the upper and lower surfaces of the ribbon, thereby forming the so-called "land". (23) The "land" ranges in thickness from 0.45 mm (0.018) to 0.76 mm (0.030 inches).

Each ribbon is transcribed with from 9 to 30 parallel indentations, spaced equally from one another across the width of the ribbon. The longitudinal rollers also have, at each edge, raised ribs, such that each edge is essentially thereby cut to form a smooth edge. The gum removed from the edge cut is referred to as trim gum, (22) although trim gum may also include any other wastage from the process.

The parallel scored ribbon then enters the nip of the latitudinal scoring rollers (19). These rollers also contain a multitude of parallel raised ribs, each set to score the gum ribbon at essentially right angles to the length and edges of the ribbon forming lands 0.025 mm (0.001) to 0.13 mm (0.005 inches) thicker than the longitudinal lands. At least one set of raised ribs (21) on the latitudinal rollers are of such height as to cut the ribbon once in every full rotation of the latitudinal scoring/cutting rollers.

The result of the gum ribbon passing through the longitudinal and latitudinal scoring and cutting rollers is a series of essentially quadrilaterally scored gum sheets (20) whereon there is scored a series of lands (23) setting out essentially the commercial dimensions of the gum sticks, or in another embodiment, the pelleted gum pieces, to be separated and wrapped or packaged.

Each longitudinally/latitudinally scored sheet is then collected and stacked in sheet stacks of from 8 to 12 sheets, preferably 9 to 10 sheets. These stacks are normally stored on wooden trays, and must be tempered at from 6 hours to 12 hours. Pellet gum sheets are stacked from 2 to 4 sheets high and tempered from 10 to 24 hours. The tempering operation normally is at a temperature of from 18°C (65°F) to 24°C (75°F) and a relative humidity (R.H.) of from 35 to 50 percent at the tempering temperature.

Normally, chewing gums formulated with petroleum waxes require a final tempering operation of from 18 to 48 hours (stick gum from 18 to 24 hours, pellet gum from 24 to 48 hours) before the gum has sufficient toughness and strength to be successfully wrapped, coated, or packaged. The wax-free gums of our invention achieve processing toughness and strength within 6 to 12 hours for stick gum and within 10 to 24 hours for a pellet gum sheet. This is referred to a fast set-up time, or rapid tempering and permits early wrapping. Tempering times are decreased from 10% to 60% of the time required for wax containing gums.

The new wax-free chewing gum process is therefore more efficient and produces the wax-free gum of our invention more efficiently and quickly. Since gum base blending times are essentially the same for wax or wax-free gums, and since chewing gum mixing of gum base, water soluble bulking and sweetening agents, and flavors are also about the same, the fact that the new wax-free gums can provide gum sheets that temper to acceptable toughness and strength in from 10 to 60% of the normal time greatly increases the amount of gum made in any given time.

Also, as earlier taught, the original chewing gum loaf is tempered at lower temperatures than with wax containing gums and more quickly, i.e., from 10 to 25 minutes, preferably less than about 15 minutes, vs. from 35 minutes to an hour for wax containing gums. This also contributes to a more efficient operation.

With the preferred wax-free, gum bases described above, and with the use of the preferred sweeteners, bulking agents, binders and water soluble softeners, and most particularly when the chewing gums formed thereby are low moisture gums containing less than about 2.0 wt. percent water, our process manufactures a wax-free stick chewing gum having a Taber Stiffness from 15 to 55 Taber Units. This is at least 5 percent less than a comparable wax gum. The wax-free gums also have a rapid set up or tempering time allowing as much as 10 hours to 24 hour reduction in total process time for the same amount of gum (compared to wax containing gums), and still having and maintaining an initial soft bite. Our wax-free gums also have superior storage stability.

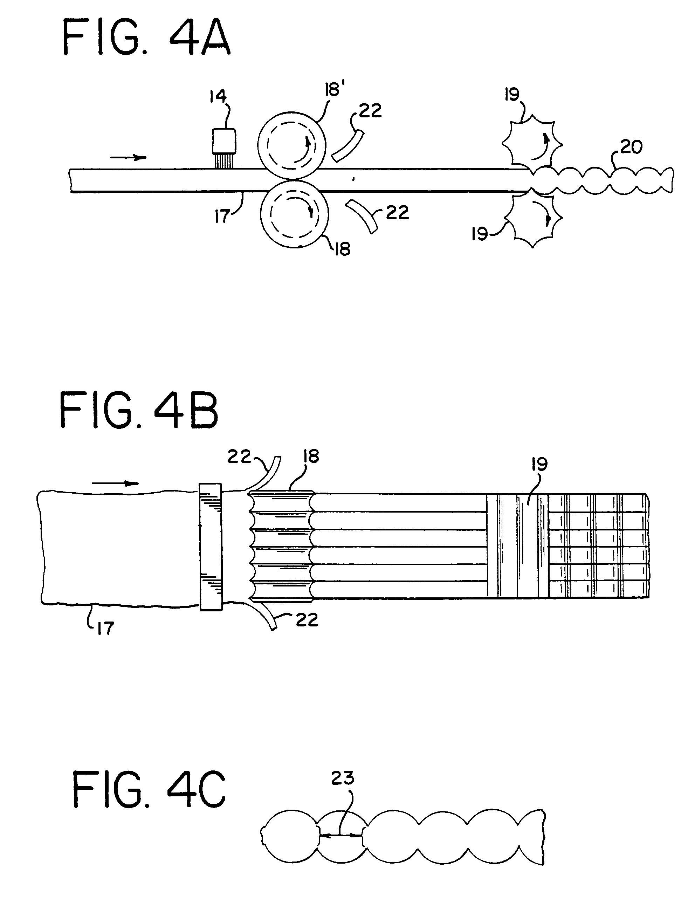

As earlier described, the improved process above is somewhat different when a pelleted, coated gum product is desired. (See Figure 4) The longitudinal/latitudinal (18) (19) scoring and cutting rollers are designed in a way to provide for the formation of essentially rectangular gum pillows. This calls for an escalloped shape to the surface of these rollers and modifications of the distances between the land forming ribs. Also, the final brushed ribbon (17) is thicker, preferably from 3.8 mm (0.150) to 7.6 mm (0.300 inches) thick when entering the scoring and cutting rollers, most preferably from 0.45 mm (0.018) to 0.64 mm (0.025 inches) thick.

The sheets (20) formed are accordingly thicker than the sheets used to form stick gum. The sheets are rectangularly scored, but also appear as multiply connected gum pillows, almost a quilted effect. However, the wax-free gums still provide the toughness needed to stack the pillowed/pelleted sheets from 2 to 4 sheets high, preferably about 3 sheets high, and still avoid the flattening of the pillowed shapes scored into the gum sheet used for pelleted products. The tempering of these thickened sheets requires from 10 to 24 hours, compared to the 24 to 48 hours normally required.

Again, the wax-free chewing gums of the invention temper quickly, provide more efficient product production, which, in this case, also avoids pellet flattening during tempering. By avoiding the flattening of pellets during stacking and tempering, the gum pellets are now effectively broken into individual gum pellets, with fewer so-called "doubles" formed during the coating process. The coating process has been earlier described, but normally involves pouring or spraying a sweetener syrup or concentrate onto the gum pellet, usually in a tumbling system, and drying to a hard sweetener or coated shell. If the pellets have flattened during the stacking and tempering stages, the flattened surfaces have an increased tendency to stick together, flat side to flat side, during the coating process to form "doubles" or "triples". This leads to process waste and inefficient recovery of final coated and pelleted product, since the "doubles" or "triples" must be discarded or recycled.

Chewing gum products contemplated as part of the present invention are generally similar to products using traditional wax containing bases. Many general types of products can be produced including reduced tack gums, sugarless gums, bubble gums (sugarless or sugar-containing), coated ball or pellet gums (sugarless or sugar-containing), dental health gums, breath freshening gums, novelty gums, low calorie gums and pharmaceutical gums. The products may be of any flavor, and may be processed in a variety of ways in either batch or continuous processes, and formed into any final shape including sticks, tabs, chunks, tapes, coextruded products, molded shapes, etc.

The following formulas are illustrative of types of products which may be produced. All ingredient levels are expressed in weight percent.

Examples 75-98 illustrate non-tack and reduced-tack chewing gums of the present invention. As can be seen, there is much latitude in the selection of flavors sweeteners and ingredient levels. Examples 75-86 illustrate use of the invention with sugar gums while Examples 87-98 describe sugarless gums. Encapsulated sweeteners are used to extend sweetness and flavor and to protect the artificial sweetener from degradation during storage. Examples 89 and 91 are low moisture products having moisture levels below 2 percent.

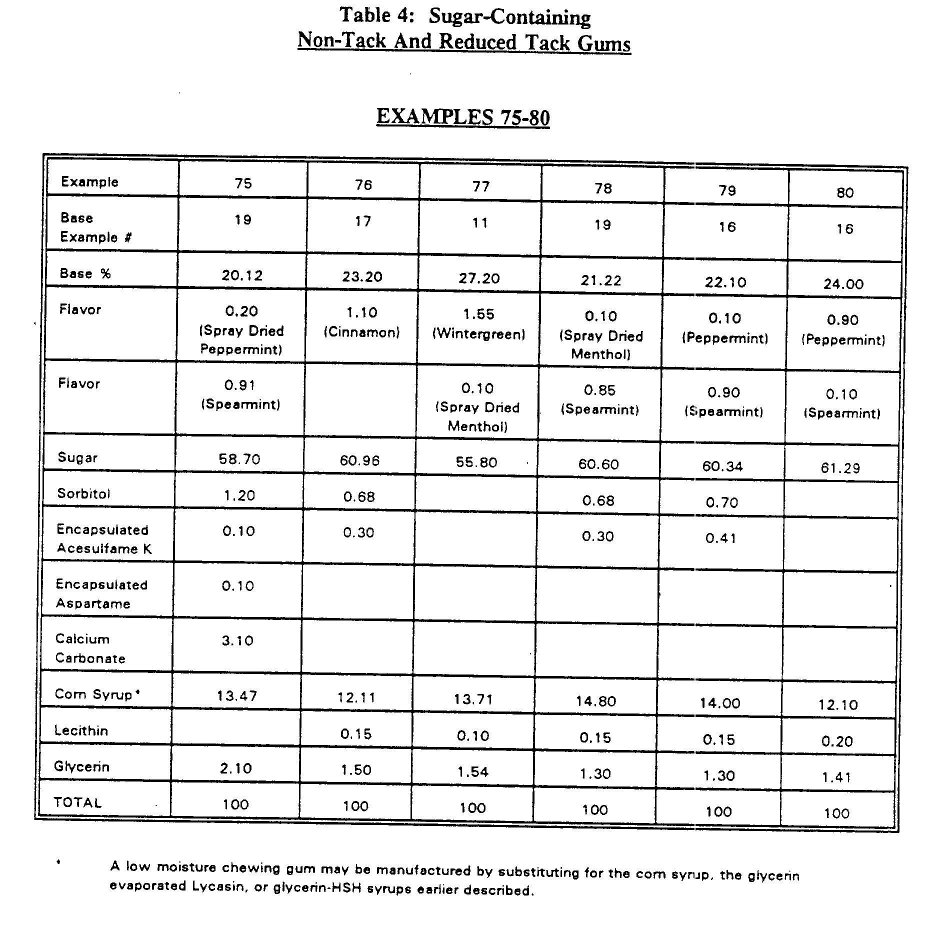

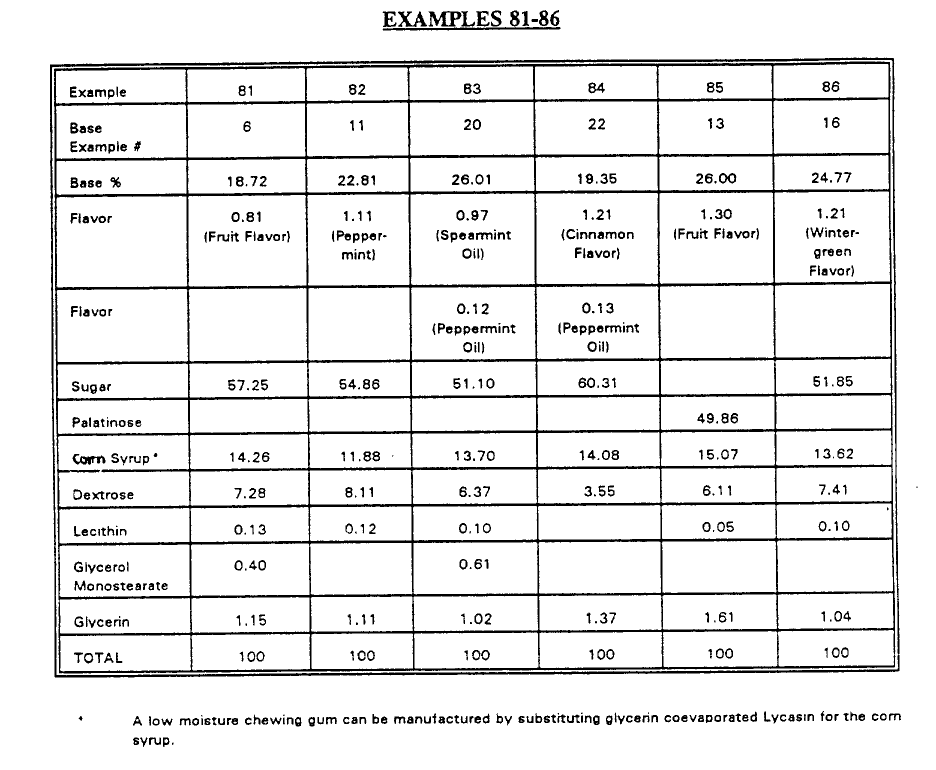

**Table 5:**

| **Sugarless Non-Tack And Reduced Tack Gums** | | | | | | |
|---|---|---|---|---|---|---|
| **EXAMPLES 87-92** | | | | | | |
| Example | 87 | 88 | 89 | 90 | 91 | 92 |
| Base Example # | 3 | 19 | 7 | 24 | 24 | 8 |
| Base % | 24.00 | 27.11 | 21.21 | 29.48 | 22.58 | 18.11 |
| Flavor | 1.07 (Citrus Oils) | 0.98 (Peppermint) | 0.97 (Spearmint Oil) | 1.15 (Peppermint Oil) | 1.47 (Cinnamon Flavor) | 1.00 (Winter-green Oil) |
| Flavor | | 0.20 (Spray Dried Menthol) | 0.15 (Peppermint Oil) | 0.21 (Spearmint Oil) | | 0.27 (Peppermint Oil) |
| Sorbitol | 51.00 | 55.06 | 55.70 | 55.15 | 48.00 | 57.53 |
| Calcium Carbonate | | | 2.11 | | 2.00 | 4.70 |
| Sorbitol Solution | 6.42 | | | | | |
| Coevaporated Lycasin (7.5% water, 25% glycerin) | 10.37 | 9.16 | 4.00 | 8.11 | 12.01 | 8.88 |
| Glycerin | 4.70 | 4.11 | 12.11 | 3.11 | 11.61 | 7.10 |
| Mannitol | 2.10 | 3.10 | 3.11 | 2.66 | 2.00 | 2.00 |
| Encapsulated Aspartame | 0.19 | | 0.25 | | | 0.21 |
| Free Aspartame | 0.05 | | 0.10 | | | 0.10 |
| Encapsulated Alitame | | 0.05 | | 0.10 | | |
| Free Alitame | | | | 0.03 | | |
| Encapsulated Sucralose | | | | | 0.21 | |
| Free Sucralose | | 0.08 | | | 0.02 | |
| Lecithin | 0.10 | 0.15 | 0.20 | | 0.10 | 0.10 |
| TOTAL | 100 | 100 | 100 | 100 | 100 | 100 |

**Table 6:**

| Reduced And Regular Tack Low Calorie Gums | | | | | | |
|---|---|---|---|---|---|---|
| **EXAMPLES 93-98** | | | | | | |
| Example | 93 | 94 | 95 | 96 | 97 | 98 |
| Base Example # | 6 | 3 | 19 | 13 | 52 | 44 |
| Base % | 19.2 | 24.7 | 19.2 | 24.0 | 19.2 | 19.2 |
| Sorbitol | | 6.0 | | | | |
| Mannitol | | 1.0 | | | | |
| Corn Syrup* | | | 6.0 | 24.6 | 18.5 | 6.0 |
| Dextrose | | | 10.0 | | 10.0 | 10.0 |
| Lactose | | | 5.0 | | | 5.0 |
| Glycerin | 2.0 | 16.4 | 8.9 | 0.4 | 1.4 | 8.9 |
| Lecithin | | 0.2 | | | | |
| Flavor | 1.0 | 1.4 | 0.9 | 1.0 | 0.9 | 0.9 |
| Oligofructose | | | 50.0 | 50.0 | | |
| Fructooligosaccharide | | | | | 50.0 | 50.0 |
| Color | | 0.05 | | | | |
| Aspartame | | 0.25 | | | | |
| High Mol. Weight Indigestible Dextrin | 67.8 | | | | | |
| Low Mol. Weight Indigestible Dextrin | | 50.0 | | | | |
| Indigestible Dextrin Syrup** | 20.0 | | | | | |
| TOTAL | 100 | 100 | 100 | 100 | 100 | 100 |

| | | | | | | |
|---|---|---|---|---|---|---|
| * Corn syrup may be partially or wholly substituted by glycerin coevaporated Lycasin. | | | | | | |
| ** Indigestible dextrin syrup may also be coevaporated with glycerin to achieve a softenar/binder for use in the gums of this invention. | | | | | | |

Examples 99-104 are sugarless products made with the non-reduced-tack bases of the present invention. Examples 105-110 are equivalent sugar products.

**Table 7:**

| Regular Tack Sugarless Gums | | | | | | |
|---|---|---|---|---|---|---|
| **EXAMPLES 99-104** | | | | | | |
| Example | 99 | 100 | 101 | 102 | 103 | 104 |
| Base Example # | 32 | 44 | 51 | 36 | 52 | 44 |
| Base % | 21.76 | 22.07 | 24.00 | 20.97 | 26.00 | 20.08 |
| Flavor | 0.92 (Peppermint Oil) | 0.77 (Spearmint Oil) | 0.83 (Spearmint Oil) | 0.99 (Cinnamon Flavor) | 0.97 (Peppermint Oil) | 1.04 (Peppermint Oil) |
| Flavor | | 0.24 (Peppermint Oil) | | | | 0.16 (Spray Dried Menthol) |
| Sorbitol | 46.54 | | | 63.61 | 51.50 | |
| Coevaporated Lycasin (7.5% Water, 25% Glycerin) | 8.47 | 7.84 | 11.20 | 7.76 | | |
| Glycerin | 5.19 | 4.91 | 2.10 | 4.20 | 12.00 | |
| Mannitol | 1.77 | | | 2.01 | 3.11 | |
| Xylitol | 15.11 | | 12.11 | | 6.27 | 78.16 |
| Palatinit (Hydrogenated Isomaltulose) | | 63.97 | 49.60 | | | |
| Aspartame | | | | 0.14 | | 0.14 |
| Encapsulated Aspartame | | | | 0.22 | | 0.22 |
| Alitame | | 0.02 | 0.02 | | | |
| Encapsulated Alitame | | 0.04 | 0.04 | | | |
| Sucralose | 0.11 | | | | 0.15 | |
| Lecithin | 0.13 | 0.14 | 0.10 | 0.10 | | 0.20 |
| TOTAL | 100 | 100 | 100 | 100 | 100 | 100 |

**Table 8:**

| Regular Tack Sugar Gums | | | | | | |
|---|---|---|---|---|---|---|
| **EXAMPLES 105-110** | | | | | | |
| Example | 105 | 106 | 107 | 108 | 109 | 110 |
| Base Example # | 57 | 52 | 44 | 39 | 61 | 40 |
| Base % | 22.38 | 20.60 | 20.08 | 23.11 | 20.02 | 21.01 |
| Flavor | 0.89 (Peppermint Oil) | 0.58 (Spearmint Oil) | 0.88 (Peppermint Oil) | 0.91 (Peppermint Oil) | 1.21 (Fruit Flavor) | 0.98 (Winter-green Fluor) |
| Flavor | | | | 0.21 (Spearmint Oil) | | 0.20 (Spray Dried Menthol) |
| Encapsulated Aspartame | | | | 0.10 | | |
| Encapsulated Acesulfame K | | | | | 0.15 | |
| Sucralose | | | | | | 0.09 |
| Sugar | 58.39 | 59.49 | 62.66 | 59.97 | 63.59 | 62.51 |
| Com Syrup* | 17.20 | 18.50 | 15.40 | 14.70 | 13.88 | 14.19 |
| Glycerin | 1.09 | 0.83 | 1.00 | 1.00 | 1.05 | 1.02 |
| Lecithin | 0.05 | | | | 10 | |
| TOTAL | 100 | 100 | 100 | 100 | 100 | 100 |

| | | | | | | |
|---|---|---|---|---|---|---|
| * Corn syrup may be partially or completely substituted for by use of glycerin coevaporated HSH (Lycasin) syrups. | | | | | | |

Examples 111-122 are examples of inventive coated pellet gums made with non-wax bases. The gum products of these examples are formed into pellets or balls for subsequent coating. Examples 111-116 are sugar pellets which could be coated with sugar syrups. Such syrups may contain modified starch (0 to 6.0 percent), compatible flavors and colors (0 to 0.30 percent), vegetable gums such as gum arabic and cellulose derivatives such as hydroxypropyl methyl cellulose (0 to 20 percent) in addition to sucrose or starch hydrolyzate in an aqueous solution.

Examples 117-122 are sugarless pellets which can be coated with sugar alcohol solutions such as those of sorbitol, xylitol and palatinit. These syrups may also contain the same modifiers listed above for sugar syrups.

In both cases (sugar and sugarless) dry coating agent (sugar or sugar alcohol) may be added between layers of coating syrup, a process known as dry charging or soft panning.

Coating may be carried out by any suitable process, most often using a conventional pan, side vented pans, high capacity pans such as those made by Driam or Dumouline, or by continuous panning techniques.

**Table 9:**

| Sugar Pellet Gums For Coating | | | | | | |
|---|---|---|---|---|---|---|
| **EXAMPLES 111-116** | | | | | | |
| Example | 111 | 112 | 113 | 114 | 115 | 116 |
| Base Example # | 40 | 36 | 37 | 51 | 52 | 47 |
| Base % | 24.32 | 24.28 | 24.30 | 24.27 | 25.17 | 24.33 |
| Flavor | 0.55 (Spearmint Oil) | 0.73 (Peppermint Oil) | 2.66 (Licorice Powder) | 0.77 (Fruit Flavor) | 0.47 (Spearmint Oil) | 0.61 (Spearmint Oil) |
| Flaver | | | 0.60 (Menthol/ Anethol | | 0.15 (Peppermint Oil) | |
| Sugar | 52.97 | 52.87 | 50.94 | 62.85 | 52.59 | 52.84 |
| Corn Syrup* | 22.16 | 22.12 | 21.60 | 22.11 | 21.62 | 22.22 |
| TOTAL | 100 | 100 | 100 | 100 | 100 | 100 |

| | | | | | | |
|---|---|---|---|---|---|---|
| * Com syrup may contain a portion of glycerin coevaporated Lycasin. Corn syrup may also be high solids corn syrup or corn syrup solids. | | | | | | |

**Table 10:**

| Sugarless Pellet Gums For Coating | | | | | | |
|---|---|---|---|---|---|---|
| **EXAMPLES 117-122** | | | | | | |
| Example | 117 | 118 | 119 | 120 | 121 | 122 |
| Base Example # | 33 | 26 | 40 | 29 | 35 | 35 |
| Base % | 31.01 | 33.00 | 32.71 | 33.03 | 30.97 | 31.45 |
| Flavor | 1.20 (Spearmint Oil) | 1.30 (Peppermint Oil) | 1.09 (Spearmint Oil) | 1.50 (Fruit Flavor) | 1.01 (Peppermint Oil) | 1.31 (Fruit Flavor) |
| Flavor | | 0.50 (Menthol) | 0.17 (Peppermint Oil) | 0.50 (Lemon Flavor) | 0.21 (Spray Dried Menthol) | |
| Sorbitol | 51.46 | 44.06 | 45.56 | 43.81 | 48.69 | 45.99 |
| Calcium Carbonate | 10.01 | 13.00 | 12.16 | 12.93 | 13.04 | 13.33 |
| Glycerin | 6.14 | 8.00 | 8.00 | 7.98 | 7.82 | 7.30 |
| Encapsulated Aspartame | 0.12 | 0.14 | 0.21 | 0.25 | 0.18 | 0.62 |
| Free Aspartame | 0.06 | | 0.10 | | 0.08 | |
| TOTAL | 100 | 100 | 100 | 100 | 100 | 100 |

Inventive bubble gums may be prepared using the bubble gum bases of the present invention such as those listed in Examples 56-74. Illustrative formulations are given as Examples 123-134. Examples 123-128 are sugar bubble gum formulas. Note that Examples 124 and 128 use blends of two inventive bases. This is a technique to optimize processing and texture properties while minimizing the necessity of maintaining different bases for each product and without having additional custom bases compounded. Examples 129-134 are sugarless bubble gum formulas.

**Table 11:**

| Sugar Bubble Gums | | | | | | |
|---|---|---|---|---|---|---|
| **EXAMPLES 123-128** | | | | | | |
| Example | 123 | 124 | 125 | 126 | 1.27 | 128 |
| Base Example # | 69 | 72/74 | 74 | 72 | 59 | 72/69 |
| Base % | 24.02 | 11.00/ 11.00 | 22.20 | 20.01 | 19.99 | 9.00/ 13.00 |
| Flavor | 0.80 (Fruit Flavor) | 0.85 (Cream Soda) | 0.60 (Lemon Lime) | 0.60 (Blueberry) | 0.60 (Strawberry) | 0.80 (Cream Soda) |
| Flavor | | 0.03 (Vanilla) | | | | 0.02 (Vanilla) |
| Sugar | 55.10 | 59.54 | 55.95 | 59.00 | 59.75 | 57.98 |
| Corn Syrup* | 17.68 | 16.53 | 19.54 | 17.99 | 16.88 | 17.44 |
| Lecithin | 0.60 | 0.35 | 0.40 | 0.51 | 0.50 | 0.45 |
| Glycerin | 1.74 | 0.70 | 0.40 | 0.81 | 1.49 | 1.31 |
| Color | 0.06 (Red) | | 0.01 (Green) | 0.48 (Blue) | 0.08 (Red) | |
| Citric Acid | | | 0.90 | 0.60 | 0.70 | |
| TOTAL | 100 | 100 | 100 | 100 | 100 | 100 |

| | | | | | | |
|---|---|---|---|---|---|---|
| * Corn syrup may be high solids com syrup, corn syrup solids, or may be partially substituted for by using glycenn coevaporated Lycasin. | | | | | | |

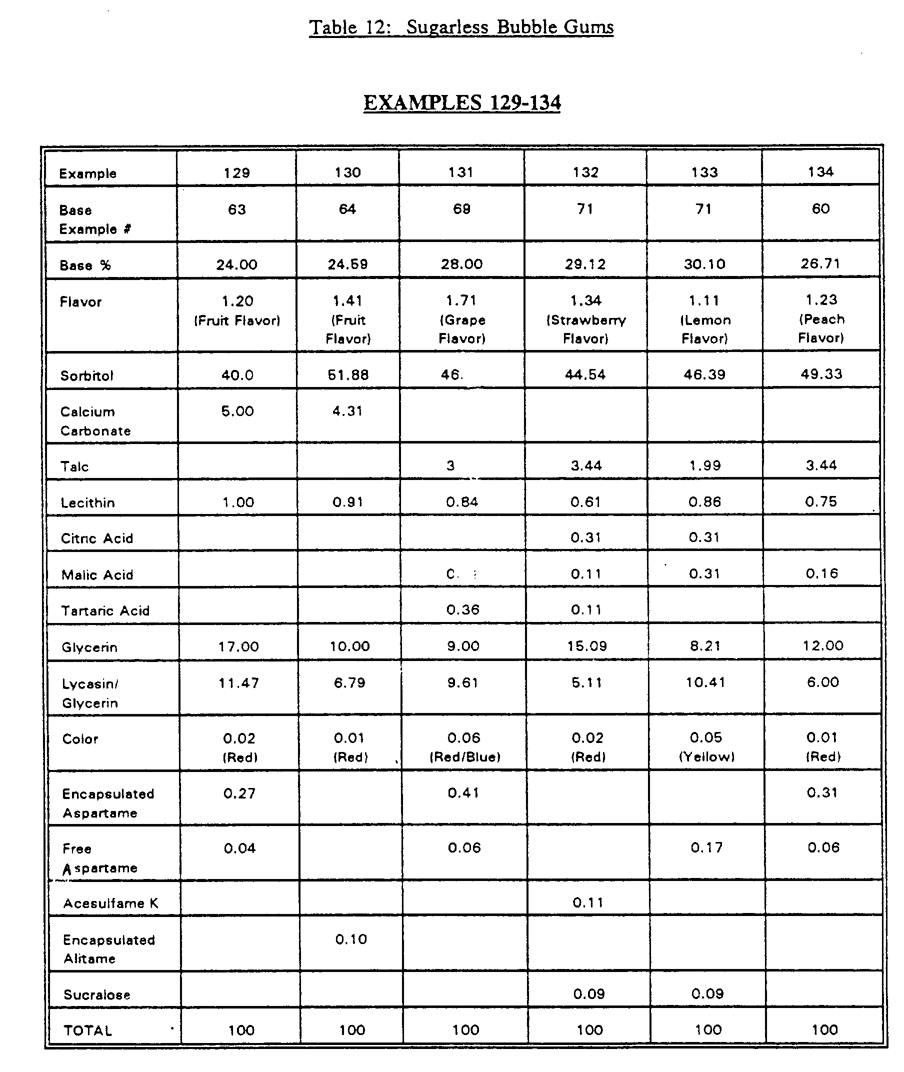

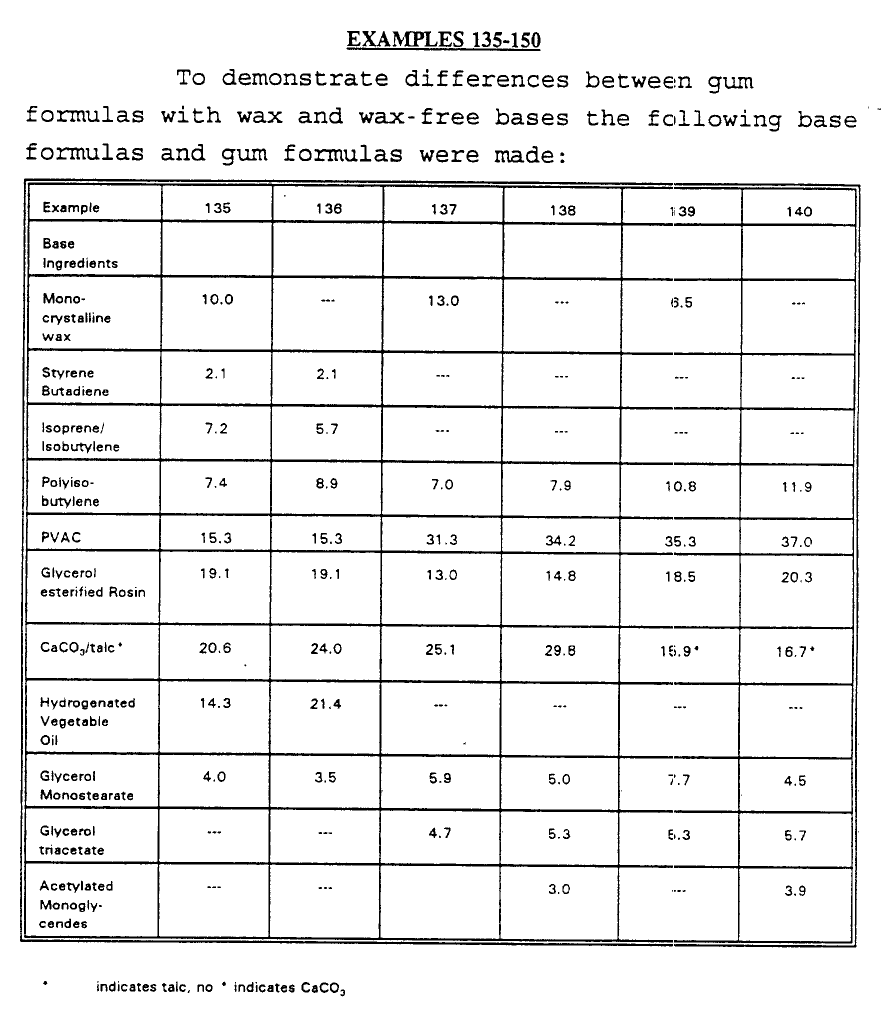

The wax-free base formula for Example 136 is very similar to Example 15 previously shown. The wax-free base formula in Example 138 is the same formula shown previously as Example 69.

The wax-free base formula for Example 136 is very similar to Example 15 previously shown. The wax-free base formula in Example 138 is the same formula shown previously as Example 69.

The wax-tree base formula of Example 140 is the same formula shown previously as Example 74.

The gum Dases of Examples 135 and 136 were each used to prepare sugar free gum products by the following formulas:

| Example | 141 | 142 | 143 | 144 |
|---|---|---|---|---|
| Gum Base of Example | 135 | 136 | 135 | 136 |
| Base | 25.2 | 25.2 | 25.2 | 25.2 |
| Sorbitol | 48.32 | 48.32 | 48.46 | 48.46 |
| Coevaporated Lycosin/Glycerin | 9.3 | 9.3 | 9.3 | 9.3 |
| Mennitol | 8.0 | 8.0 | 8.0 | 8.0 |
| Glycerin | 7.4 | 7.4 | 7.4 | 7.4 |
| Peppermint Flavor | 1.4 | 1.4 | - | - |
| Spearmint Flavor | - | - | 1.3 | 1.3 |
| Lecithin | 0.13 | 0.13 | 0.13 | 0.13 |
| Encapsulated Aspartame | 0.25 | 0.25 | 0.21 | 0.21 |

After mixing, the gum loaves having the wax-free base were sheeted with less tempering, since they began to set up faster. Sheeting machine adjustments for extrusion temperature were higher and scoring rolls had to be reset in order to properly sheet and score the gum with wax-free base. Even though the gum was softer with wax-free base compared to gum made with wax base, a surface toughness was noted that allowed the gum to be more easily handled after sheeting and before wrapping. Because of this surface toughness, gum could be wrapped sooner after sheeting than could the gum made with wax base. Even though the wax-free gum was softer, it was just as easy to wrap as the wax containing gum.

To demonstrate differences in softness, Taber Stiffness data was taken 2 weeks after manufacture.
Results were:

| Taber Stiffness (average of 5 sticks) | |
|---|---|
| Example 141 | 56.8 |
| Example 142 | 41.0 |
| Example 143 | 64.2 |
| Example 144 | 32.2 |

Results show that a wax-free gum made with wax-free base gives a softer initial bite than gum made with base containing wax.

The Taber Stiffness is used to measure the stiffness of stick chewing gum. Chewing gum in the pellet form or chunk form, as is the case of most soft bubble gums, is measured for toughness using an Instron physical test. The Instron measures the force required for a probe to penetrate a piece of chunk gum to a depth of 0.1 inch. Instron data is expressed as work, in pounds-inches.

For Examples 145-146, bases of Examples 137 and 138 were used to make a chunk sugar bubble gum type fruit product according to the following formula.

| | | |
|---|---|---|
| Example | 145 | 146 |
| Base of Example | 137 | 138 |
| Base | 24.0 | 24.0 |
| Sugar | 55.04 | 55.04 |
| High maltose syrup | 17.7 | 17.7 |
| Glycerin | 1.8 | 1.8 |
| Fruit Flavor | 0.8 | 0.8 |
| Lecithin | 0.6 | 0.6 |
| Color | 0.06 | 0.06 |
| Instron work, pound-inches | 0.100 | 0.0492 |

For examples 147-150, the bases of Examples 139-140 were used to make a chunk sugar bubble gum having tart flavors according to the following formulas:

| Example | Example 147 | Example 148 | Example 149 | Example 150 |
|---|---|---|---|---|
| Base of Example | 139 | 140 | 139 | 140 |
| Base | 22.2 | 22.2 | 20.0 | 20.0 |
| Sugar | 55.99 | 55.99 | 56.95 | 56.95 |
| High martose syrup | 19.5 | 19.5 | 20.0 | 20.0 |
| Glycerin | 0.4 | 0.4 | 1.0 | 1.0 |
| Lecithin | 0.4 | 0.4 | 0.5 | 0.5 |
| Lemon Flavor | 0.6 | 0.6 | - | - |
| Blueberry Flavor | - | - | 0.6 | 0.6 |
| Citric acid | 0.9 | 0.9 | 0.6 | 0.6 |
| Color | 0.01 | 0.01 | 0.35 | 0.35 |
| instron, pound-inches | 0.235 | 0.056 | .0437 | .0224 |

As shown by the Instron data, examples 146, 148 and 150 made with wax-free bases have a lower value and thus have a softer initial bite than does a comparable gum made with wax containing base even though the gum formulations are the same.

The scope of the invention is indicated in the appended claims, and all changes that come within the meaning and range or equivalency of the claims are intended to be embraced therein.

## Claims

1. A method of making a wax-free chewing gum having an initial soft bite comprising:
mixing selected wax-free chewing gum ingredients which provide a chewing gum with an initial soft bite as measured by having a Taber Stiffness ranging from 15 to 55 Taber Units, thereby forming a raw mixture;
tempering the raw mixture for less than 30 minutes to form a tempered mixture; forming said tempered mixture into scored gum sheets;
tempering the gum sheets for from 6 to 24 hours, thereby forming tempered gum sheets, then
processing the tempered gum sheets to a finished chewing gum product.

2. A method as claimed in claim 1 wherein the selected wax-free gum ingredients provide a chewing gum having an Instron yield ranging from 2.3 x 10⁻⁴ to 9.2 x 10⁻⁴ kg-m (0.02 to 0.08 pound-inches).

3. A method as claimed in claim 1 or claim 2 comprising:
forming the raw gum mixture into loaves;
tempering the loaves for from 10 to 30 minutes at essentially constant temperature and relative humidity to form tempered loaves;
collecting and blending the tempered loaves into a semi-fluid extrudable gum mass having a temperature at least 5° C above the temperature of the tempered gum loaves;
process the fluid gum mass into essentially continuous gum strip;
processing the continuous gum strip into quadrilaterally scored and trimmed gum sheet;
tempering the scored and trimmed gum sheet for from 6 to 24 hours at an essentially constant selected temperature ranging from 16°C (60°F) to 26°C (80°F) and at an essentially constant relative humidity for the selected temperature ranging from 35 to 55 percent thereby obtaining tempered, scored gum sheet; and
processing the tempered scored gum sheet into chewing gum product having initial soft bite.

4. A method as claimed in claim 3 wherein the semi-fluid gum mass is extruded at a gum temperature of from 45°C to 55°C to form continuous gum ribbon.

5. A method as claimed in claim 3 or claim 4 wherein the continuous gum strip is reduced by at least one set of reducing rollers and at least one set of finishing rollers to a thickness of from 1.27 to 2.54 mm (0.05 to 0.10 inches) and then quadrilaterally scored, trimmed, and cut to form gum sheet.

6. A method as claimed in any one of claims 1 to 5 wherein the loaves or gum sheets are tempered at from 35°C to 45°C.

7. A method as claimed in any one of claims 1 to 6 wherein the loaves or gum sheets are tempered at from 35% to 55% relative humidity.

8. A method as claimed in any one of claims 1 to 7 wherein the chewing gum product is stick gum or coated pelleted gum.

9. A method as claimed in any one of claims 1 to 8 wherein the raw gum mixture comprises from 0.0 to 20 wt% trim gum.

10. A method as claimed in any one of claims 1 to 9 wherein the gum base does not include natural elastomers.

11. A method as claimed in any one of claims 1 to 10 wherein the gum comprises synthetic elastomers selected from the group consisting of polyisobutylene, polyisoprene, isobutylene-isoprene copolymer, styrene-butadiene copolymer, polyvinyl acetate or mixtures thereof.

12. A method as claimed in any one of claims 1 to 11 wherein the gum comprises water soluble softeners and emulsifiers selected from the group consisting of glycerin, propylene glycol, lecithin, and mixtures thereof and binding agents selected from the group consisting of sugar syrups, sugar alcohol syrups, hydrogenated starch hydrolysate syrups, coevaporated Lycasin, and mixtures thereof.

13. A method as claimed in any one of claims 1 to 12, wherein the gum comprises water soluble ingredients, flavours, water soluble bulking agents, and gum base:
the gum base comprising, by weight percent of the gum base, from 10 to 35 wt% synthetic elastomers, from 0 to 30 wt% natural elastomers, from 5 to 55 wt% elastomer plasticizer, from 5 to 40 wt% fillers and from 5 to 40 wt% fats oils and softeners;
the water soluble bulking agents comprising, by weight percent of total bulking agents, from 0.01 to 98 wt% sweeteners selected from high intensity sweeteners low intensity sweeteners and admixtures thereof, from 1.0 to 50 wt% water soluble softeners and emulsifiers; and from 1.0 to 50 wt% binding agents.

14. A method as claimed in any one of claims 1 to 13 wherein the gum comprises:
from 10 to 80 wt% wax free gum base,
from 10 to 85 wt% water soluble ingredients, and
from 0.10 to 10.0 wt% flavouring agents.

15. A method as claimed in any one of claims 1 to 14 wherein the gum comprises:
from 10 to 35 wt% wax free gum base,
from 0.1 to 10.0 wt% flavours, and
from 50 to 85 wt% water soluble ingredients.

16. A method as claimed in any one of claims 1 to 12, wherein the gum comprises:
from 0.1 to 10 wt% flavours;
from 10 to 40 wt% wax-free gum base comprising, by weight percent of gum base, from 20 to 60 wt% synthetic elastomers, from 5 to 55 wt% elastomer plasticizer, from 5 to 40 wt% fillers, from 5 to 40 wt% fats oils softeners; and
from 50 to 85 wt% water soluble bulking agents, comprising by weight percent of bulking agent, from 0.01 to 98 wt% sweeteners selected from high intensity sweeteners low intensity sweeteners and mixtures thereof, from 1.0 to 50 wt% water soluble softeners and emulsifiers, and from 1.0 to 50 wt% binding agents.

17. A method as claimed in any one of claims 13 to 15, wherein the water soluble ingredients comprise, by weight percent of the water soluble ingredients:
from 1.0 to 15 wt% water soluble softeners; and
from 5.0 to 60 wt% glycerin modified binders.

18. A method as claimed in any one of claims 1 to 17 wherein the gum mixture comprises from 15 to 35 wt% wax-free gum base.

19. A method as claimed in any one of claims 1 to 18 wherein the wax-free gum is a bubble gum.

20. A method as claimed in any one of claims 1 to 18 comprising:
at least one gum base comprising, by weight percent of the gum base:
from 20 to 60 wt% of at least two synthetic elastomers selected from the group consisting of polyisobutylene styrene-butadiene copolymer polyisoprene isoprene-isobutylene copolymer polyvinyl acetate and mixtures thereof,
from 5 to 55 wt% elastomer plasticisers selected from the group consisting of natural rosin esters of glycerol, glycerol esters of partially hydrogenated rosin, terpene resins, pentaerythritol esters of rosin, methyl or ethyl esters of partially hydrogenated rosin, or mixtures thereof,
from 5 to 40 wt% fillers,
from 5 to 40 wt% fats oils softeners;
water soluble bulking agents comprising, by weight percent of the water soluble bulking agents:
at least 1 wt% sweetner selected from high intensity sweeteners, low intensity sweeteners, or mixtures thereof,
from 1.0 to 15.0 wt% water soluble softeners selected from glycerine, propylene glycol, or mixtures thereof, and
from 5.0 to 60.0 wt% glycerin modified binder.

21. A chewing gum including the gum base and water soluble bulking agents as described in claim 20 wherein the glycerin modified binder is a glycerin modified hydrogenated starch hydrolysate comprising from 20 to 30 wt% glycerin, from 7 to 10 wt% water, and hydrogenated starch hydrolysate solids, and further wherein the chewing gum is a low moisture chewing gum having less than 2.0 wt% water based on the total chewing gum weight.

## Patentansprüche

1. Verfahren zur Herstellung eines wachsfreien Kaugummis mit einem weichen Anfangsbiss, umfassend:
- Mischen von ausgewählten wachsfreien Kaugummi-Ingredienzien, die einen Kaugummi mit einem weichen Anfangsbiss ergeben, der als Taber-Steifigkeit (Taber Stiffness) zwischen 15 und 55 Taber-Einheiten gemessen wird, wodurch eine Rohmischung gebildet wird;
- Tempern (tempering) der Rohmischung weniger als 30 Minuten lang, wodurch eine getemperte Mischung gebildet wird;
- Formen von eingekerbten Kaugummiplatten aus der getemperten Mischung;
- Tempern der Kaugummiplatten 6 bis 24 Stunden lang, wodurch getemperte Kaugummiplatten gebildet werden, und sodann
- Bearbeiten der getemperten Kaugummiplatten zum Erhalt eines Kaugummi-Endproduktes.

2. Verfahren nach Anspruch 1, bei dem die ausgewählten wachsfreien Kaugummi-Ingredienzien einen Kaugummi mit einer Instron-Nachgiebigkeit (Instron yield) zwischen 2,3 x 10⁻⁴ und 9,2 x 10⁻⁴ kg-m (0,02 bis 0,08 Pfund-Zoll) ergeben.

3. Verfahren nach Anspruch 1 oder Anspruch 2, umfassend:
- Formen von Laiben (loaves) aus der Kaugummi-Rohmischung;
- Tempern der Laibe zwischen 10 und 30 Minuten lang bei im Wesentlichen konstanter Temperatur und relativer Feuchtigkeit, wodurch getemperte Laibe gebildet werden;
- Zusammenbringen und Mischen der getemperten Laibe zum Erhalt einer halbflüssigen, extrudierbaren Kaugummimasse mit einer Temperatur, die mindestens 5°C über der Temperatur der getemperten Kaugummi-Laibe liegt;
- Bearbeiten der flüssigen Kaugummimasse zum Erhalt eines im Wesentlichen zusammenhängenden Kaugummistreifens;
- Bearbeiten des zusammenhängenden Kaugummistreifens zum Erhalt einer vierseitig eingekerbten und beschnittenen Kaugummiplatte;
- Tempern der eingekerbten und beschnittenen Kaugummiplatte zwischen 6 und 24 Stunden lang bei einer im Wesentlichen konstant gewählten Temperatur, die zwischen 16°C (60°F) und 26°C (80°F) liegt, und bei einer im Wesentlichen konstanten relativen Feuchtigkeit für die jeweils gewählte Temperatur, die zwischen 35 und 55 Prozent liegt, wodurch eine getemperte, eingekerbte Kaugummiplatte erhalten wird, und
- Bearbeiten der getemperten, eingekerbten Kaugummiplatte zum Erhalt eines Kaugummiprodukts mit einem weichen Anfangsbiss.

4. Verfahren nach Anspruch 3, bei dem die halbflüssige Kaugummimasse bei einer Temperatur der Masse zwischen 45°C und 55°C extrudiert wird, wodurch ein zusammenhängendes Kaugummiband gebildet wird.

5. Verfahren nach Anspruch 3 oder Anspruch 4, bei dem die Stärke des zusammenhängenden Kaugummistreifens mit Hilfe von mindestens einem Satz Reduzierwalzen (reducing rollers) und mindestens einem Satz Konfektionierwalzen (finishing rollers) auf zwischen 1,27 und 2,54 mm (0,05 bis 0,10 Zoll) reduziert wird, und der zusammenhängende Kaugummistreifen dann vierseitig eingekerbt, beschnitten und geschnitten wird, wodurch eine Kaugummiplatte gebildet wird.

6. Verfahren nach einem der Ansprüche 1 bis 5, bei dem die Laibe oder Kaugummiplatten bei 35°C bis 45°C getempert werden.

7. Verfahren nach einem der Ansprüche 1 bis 6, bei dem die Laibe oder Kaugummiplatten bei einer relativen Feuchtigkeit zwischen 35% und 55% getempert werden.

8. Verfahren nach einem der Ansprüche 1 bis 7, bei dem es sich bei dem Kaugummiprodukt um Kaugummistreifen oder Kaugummidragees handelt.

9. Verfahren nach einem der Ansprüche 1 bis 8, bei dem die Kaugummi-Rohmischung zwischen 0,0 und 20 Gew.-% Kaugummi-Schneidabfall enthält.

10. Verfahren nach einem der Ansprüche 1 bis 9, bei dem die Kaugummibase keine natürlichen Elastomere umfasst.

11. Verfahren nach einem der Ansprüche 1 bis 10, bei dem der Kaugummi synthetische Elastomere umfasst, die aus der Gruppe bestehend aus Polyisobutylen, Polyisopren, lsobutylen-lsopren-Copolymer, Styrol-Butadien-Copolymer, Polyvinylacetat oder Gemischen davon ausgewählt werden.

12. Verfahren nach einem der Ansprüche 1 bis 11, bei dem der Kaugummi wasserlösliche Weichmacher und Emulgatoren, die aus der Gruppe bestehend aus Glycerin, Propylenglykol, Lecithin und Gemischen davon ausgewählt werden, sowie Bindemittel umfasst, die aus der Gruppe bestehend aus Zuckersirupen, Zuckeralkoholsirupen, Sirupen aus Hydrolysaten von hydrierter Stärke, eingedampftem Lycasin (coevaporated Lycasin) und Gemischen davon ausgewählt werden.

13. Verfahren nach einem der Ansprüche 1 bis 12, bei dem der Kaugummi wasserlösliche Ingredienzien, Aromen, wasserlösliche Füllmittel und Kaugummibase umfaßt, wobei
- die Kaugummibase zwischen 10 und 35 Gew.-% synthetische Elastomere, zwischen 0 und 30 Gew.-% natürliche Elastomere, zwischen 5 und 55 Gew.-% Elastomer-Plastifiziermittel, zwischen 5 und 40 Gew.-% Füllstoffe und zwischen 5 und 40 Gew.-% Fette, Öle und Weichmacher umfasst, wobei sich die Prozentangaben auf das Gewicht der Kaugummibase beziehen, und
- die wasserlöslichen Füllmittel zwischen 0,01 und 98 Gew.-% Süßungsmittel, die aus Süßungsmitteln mit hoher Süßkraft, Süßungmitteln mit geringer Süßkraft und Gemischen davon ausgewählt werden, zwischen 1,0 und 50 Gew.-% wasserlösliche Weichmacher und Emulgatoren und zwischen 1,0 und 50 Gew.-% Bindemittel umfassen, wobei sich die Prozentangaben auf das Gewicht der gesamten Füllmittel beziehen.

14. Verfahren nach einem der Ansprüche 1 bis 13, bei dem der Kaugummi
- zwischen 10 und 80 Gew.-% wachsfreie Kaugummibase,
- zwischen 10 und 85 Gew.-% wasserlösliche Ingredienzien, und
- zwischen 0,10 bis 10,0 Gew.-% Aromastoffe
umfasst.

15. Verfahren nach einem der Ansprüche 1 bis 14, bei dem der Kaugummi
- zwischen 10 und 35 Gew.-% wachsfreie Kaugummibase,
- zwischen 0,1 und 10,0 Gew.-% Aromen, und
- zwischen 50 bis 85 Gew.-% wasserlösliche Ingredienzien
umfasst.

16. Verfahren nach einem der Ansprüche 1 bis 12, bei dem der Kaugummi
- zwischen 0,1 bis 10 Gew.-% Aromen,
- zwischen 10 und 40 Gew.-% wachsfreie Kaugummibase, die zwischen 20 und 60 Gew.-% synthetische Elastomere, zwischen 5 und 55 Gew.-% Elastomer-Plastifiziermittel, zwischen 5 und 40 Gew.-% Füllstoffe, zwischen 5 und 40 Gew.-% Fette, Öle und Weichmacher umfasst, wobei sich die Prozentangaben auf das Gewicht der Kaugummibase beziehen, und
- zwischen 50 und 85 Gew.-% wasserlösliche Füllmittel, die zwischen 0,01 und 98 Gew.-% Süßungsmittel umfassen, ausgewählt aus Süßungsmitteln mit hoher Süßkraft, Süßungmitteln mit geringer Süßkraft und Gemischen davon, zwischen 1,0 und 50 Gew.-% wasserlösliche Weichmacher und Emulgatoren und zwischen 1,0 und 50 Gew.-% Bindemittel, wobei sich die Prozentangaben auf das Gewicht der Füllmittel beziehen,
umfasst.

17. Verfahren nach einem der Ansprüche 13 bis 15, bei dem die wasserlöslichen Ingredienzien
- zwischen 1,0 und 15 Gew.-% wasserlösliche Weichmacher und
- zwischen 5,0 und 60 Gew.-% mit Glycerin modifizierte Binder
umfassen, wobei sich die Prozentangaben auf das Gewicht der wasserlöslichen Ingredienzien beziehen.

18. Verfahren nach einem der Ansprüche 1 bis 17, bei dem die Kaugummi-Mischung zwischen 15 und 35 Gew.-% wachsfreie Kaugummibase umfasst.

19. Verfahren nach einem der Ansprüche 1 bis 18, bei dem sich bei dem wachsfreien Kaugummi um Ballonkaugummi handelt.

20. Verfahren nach einem der Ansprüche 1 bis 18, umfassend:
- mindestens eine Kaugummibase, umfassend:
- zwischen 20 und 60 Gew.-% von mindestens zwei synthetischen Elastomeren, die aus der Gruppe bestehend aus Polyisobutylen-Styrol-Butadien-Copolymer, Polyisopren-Isopren-Isobutylen-Copolymer, Polyvinylacetat und Gemischen davon ausgewählt werden,
- zwischen 5 und 55 Gew.-% Elastomer-Plastifiziermittel, die aus der Gruppe bestehend aus natürlichen Kolophonium-Estern von Glycerin, Glycerinestem von teilweise hydriertem Kolophonium, Terpenharzen, Pentaerythrit-Estern von Kolophonium, Methyl- oder Ethylestern von teilweise hydriertem Kolophonium oder Gemischen davon ausgewählt werden,
- zwischen 5 und 40 Gew.-% Füllstoffe,
- zwischen 5 und 40 Gew.-% Fette, Öle und Weichmacher,
wobei sich die Prozentangaben auf das Gewicht der Kaugummibase beziehen,
- wasserlösliche Füllmittel, umfassend:
- mindestens 1 Gew.-% Süßungsmittel, das aus Süßungsmitteln mit hoher Süßkraft, Süßungsmitteln mit geringer Süßkraft und Gemischen davon ausgewählt wird,
- zwischen 1,0 und 15,0 Gew.-% wasserlösliche Weichmacher, die aus Glycerin, Propylenglykol oder Gemischen davon ausgewählt werden, und
- zwischen 5,0 und 60,0 Gew.-% Glycerin-modifizierte Binder,
wobei sich die Prozentangaben auf das Gewicht der wasserlöslichen Füllmittel beziehen.

21. Kaugummi, umfassend die Kaugummibase und wasserlösliche Füllmittel wie in Anspruch 20 beschrieben, wobei der Glycerin-modifizierte Binder ein Glycerinmodifiziertes hydriertes Stärkehydrolysat ist, umfassend von 20 bis 30 Gew.-% Glycerin, von 7 bis 10 Gew.-% Wasser, und Feststoffe des hydrierten Stärkehydrolysats, wobei das Kaugummi ein feuchtigkeitsarmes Kaugummi ist, mit einem Wassergehalt von weniger als 2,0 Gew.-%, basierend auf dem Gesamtgewicht des Kaugummis.

## Revendications

1. Procédé de fabrication d'une gomme à mâcher sans cire initialement molle pendant la mastication, comprenant les étapes consistant à :
mélanger des ingrédients choisis pour gomme à mâcher sans cire qui fournissent une gomme à mâcher initialement molle pendant la mastication, mesurée comme ayant une rigidité Taber comprise entre 15 et 55 unités Taber, formant ainsi un mélange brut ;
faire revenir le mélange brut pendant moins de 30 minutes pour former un mélange revenu ;
transformer ledit mélange revenu en des feuilles de gomme encochées ;
faire revenir les feuilles de gomme pendant 6 à 24 heures, formant ainsi des feuilles de gomme revenues ; et ensuite
transformer les feuilles de gomme revenues en un produit fini de gomme à mâcher.

2. Procédé selon la revendication 1, dans lequel les ingrédients choisis de la gomme sans cire fournissent une gomme à mâcher ayant une élasticité Instron comprise entre 2,3 x 10⁻⁴ et 9,2 x 10⁻⁴ kg-m (entre 0,02 et 0,08 livre-pouce).

3. Procédé selon la revendication 1 ou la revendication 2, comprenant les étapes consistant à :
transformer le mélange brut de gomme en des pains ;
faire revenir les pains pendant 10 à 30 minutes à une température et à une humidité relative sensiblement constantes pour former des pains revenus ;
recueillir et mélanger les pains revenus pour obtenir une masse de gomme semi-fluide pouvant être extrudée, ayant une température située au moins 5°C au-dessus de la température des pains de gomme revenus ;
transformer la masse de gomme fluide en une bande de gomme sensiblement continue ;
transformer la bande de gomme continue en une feuille de gomme présentant des encoches en quadrilatères et coupée à finition ;
faire revenir la feuille de gomme encochée et coupée à finition pendant 6 à 24 heures à une température choisie sensiblement constante, comprise entre 16°C (60°F) et 26°C (80°F) et à une humidité relative sensiblement constante pour la température choisie, comprise entre 35 et 55 %, obtenant ainsi une feuille de gomme revenue encochée ; et
transformer la feuille de gomme revenue encochée en un produit de gomme à mâcher initialement mou pendant la mastication.

4. Procédé selon la revendication 3, dans lequel on extrude la masse de gomme semi-fluide à une température de la gomme de 45°C à 55°C pour former un ruban continu de gomme.

5. Procédé selon la revendication 3 ou la revendication 4, dans lequel on réduit le ruban continu de gomme au moyen d'au moins un jeu de rouleaux de réduction et d'au moins un jeu de rouleaux de finissage jusqu'à une épaisseur de 1,27 à 2,54 mm (0,05 à 0,10 pouce) et ensuite, on réalise des encoches en quadrilatères, on le coupe à finition et on le découpe pour former une feuille de gomme.

6. Procédé selon l'une quelconque des revendications 1 à 5, dans lequel on fait revenir les pains ou les feuilles de gomme à une température de 35°C à 45°C.

7. Procédé selon l'une quelconque des revendications 1 à 6, dans lequel on fait revenir les pains ou les feuilles de gomme à une humidité relative de 35 % à 55 %.

8. Procédé selon l'une quelconque des revendications 1 à 7, dans lequel le produit de gomme à mâcher est une gomme en tablettes ou une gomme en granules enrobés.

9. Procédé selon l'une quelconque des revendications 1 à 8, dans lequel le mélange brut de gomme comprend de 0,0 à 20 % en poids de gomme coupée à finition.

10. Procédé selon l'une quelconque des revendications 1 à 9, dans lequel la base de gomme ne comprend pas d'élastomères naturels.

11. Procédé selon l'une quelconque des revendications 1 à 10, dans lequel la gomme comprend des élastomères synthétiques choisis dans l'ensemble constitué par les polyisobutylène, polyisoprène, copolymère d'isobutylène-isoprène, copolymère de styrène-butadiène, acétate de polyvinyle ou des mélanges de ceux-ci.

12. Procédé selon l'une quelconque des revendications 1 à 11, dans lequel la gomme comprend des émollients et des émulsifiants solubles dans l'eau, choisis dans l'ensemble constitué par les glycérol, propylèneglycol, lécithine et des mélanges de ceux-ci, et des liants choisis dans l'ensemble constitué de sirops de sucre, de sirops d'alcool de sucre, de sirops d'hydrolysats hydrogénés d'amidon, de la Lycasine co-évaporée et de mélanges de ceux-ci.

13. Procédé selon l'une quelconque des revendications 1 à 12, dans lequel la gomme comprend des ingrédients solubles dans l'eau, des arômes, des agents de charge solubles dans l'eau et une base de gomme :
la base de gomme comprenant, en pourcentage en poids par rapport à la base de gomme, de 10 à 35 % en poids d'élastomères synthétiques, de 0 à 30 % en poids d'élastomères naturels, de 5 à 55 % en poids de plastifiant pour élastomères, de 5 à 40 % en poids de charges et de 5 à 40 % en poids de graisses, d'huiles et d'émollients ;
les agents de charge solubles dans l'eau comprenant, en pourcentage en poids par rapport aux agents de charge totaux, de 0,01 à 98 % en poids d'édulcorants choisis parmi des édulcorants d'intensité élevée, des édulcorants de faible intensité et des mélanges de ceux-ci, de 1,0 à 50 % en poids d'émollients et d'émulsifiants solubles dans l'eau ; et de 1,0 à 50 % en poids de liants.

14. Procédé selon l'une quelconque des revendications 1 à 13, dans lequel la gomme comprend :
de 10 à 80 % en poids d'une base de gomme sans cire,
de 10 à 85 % en poids d'ingrédients solubles dans l'eau et
de 0,10 à 10,0 % en poids d'agents aromatisants.

15. Procédé selon l'une quelconque des revendications 1 à 14, dans lequel la gomme comprend :
de 10 à 35 % en poids d'une base de gomme sans cire,
de 0,1 à 10,0 % en poids d'arômes et
de 50 à 85 % en poids d'ingrédients solubles dans l'eau.

16. Procédé selon l'une quelconque des revendications 1 à 12, dans lequel la gomme comprend :
de 0,1 à 10 % en poids d'arômes,
de 10 à 4.0 % en poids d'une base de gomme sans cire comprenant, en pourcentage en poids par rapport à la base de gomme, de 20 à 60 % en poids d'élastomères synthétiques, de 5 à 55 % en poids de plastifiant pour élastomère, de 5 à 40 % en poids de charges, de 5 à 40 % en poids de graisses, d'huiles et d'émollients ; et
de 50 à 85 % en poids d'agents de charge solubles dans l'eau, comprenant, en pourcentage en poids par rapport à l'agent de charge, de 0,01 à 98 % en poids d'édulcorants choisis parmi des édulcorants d'intensité élevée, des édulcorants de faible intensité et des mélanges de ceux-ci, de 1,0 à 50 % en poids d'émollients et d'émulsifiants solubles dans l'eau et de 1,0 à 50 % en poids de liants.

17. Procédé selon l'une quelconque des revendications 13 à 15, dans lequel les ingrédients solubles dans l'eau comprennent, en pourcentage en poids par rapport aux ingrédients solubles dans l'eau :
de 1,0 à 15 % en poids d'émollients solubles dans l'eau ; et
de 5,0 à 60 % en poids de liants modifiés avec du glycérol.

18. Procédé selon l'une quelconque des revendications 1 à 17, dans lequel le mélange de gomme comprend de 15 à 35 % en poids de base de gomme sans cire.

19. Procédé selon l'une quelconque des revendications 1 à 18, dans lequel la gomme sans cire est une gomme à faire des bulles.

20. Procédé selon l'une quelconque des revendications 1 à 18, comprenant :
au moins une base de gomme comprenant, en pourcentage en poids par rapport à la base de gomme :
de 20 à 60 % en poids d'au moins deux élastomères synthétiques choisis dans l'ensemble constitué par les polyisobutylène, copolymère de styrène-butadiène, polyisoprène, copolymère d'isoprène-isobutylène, acétate de polyvinyle et des mélanges de ceux-ci,
de 5 à 55 % en poids de plastifiants pour élastomères choisis dans l'ensemble constitué par les esters naturels de colophane et de glycérol, esters de glycérol et de colophane partiellement hydrogénée, résines terpéniques, esters de pentaérythritol et de colophane, esters méthyliques ou éthyliques de colophane partiellement hydrogénée, ou des mélanges de ceux-ci,
de 5 à 40 % en poids de charges,
de 5 à 40 % en poids de graisses, d'huiles et d'émollients ;
des agents de charge solubles dans l'eau, comprenant, en pourcentage en poids par rapport aux agents de charge solubles dans l'eau :
au moins 1 % en poids d'un édulcorant choisi parmi des édulcorants d'intensité élevée, des édulcorants de faible intensité ou des mélanges de ceux-ci,
de 1,0 à 15,0 % en poids d'émollients solubles dans l'eau, choisis parmi le glycérol, un propylèneglycol ou des mélanges de ceux-ci, et
de 5,0 à 60,0 % en poids de liant modifié avec du glycérol.

21. Gomme à mâcher comportant la base de gomme et les agents de charge solubles dans l'eau, tels que décrits dans la revendication 20, dans laquelle le liant modifié avec du glycérol est un hydrolysat d'amidon hydrogéné modifié avec du glycérol, comprenant de 20% à 30% en poids de glycérol, de 7% à 10% en poids d'eau et des solides d'hydrolysat d'amidon hydrogéné, et dans laquelle en outre la gomme à mâcher est une gomme à mâcher à faible taux d'humidité ayant moins de 2% en poids d'eau sur la base du poids total de la gomme à mâcher.
